# EUROPEAN PATENT SPECIFICATION

(11) **EP 3 273 741 B1**
(45) Date of publication and mention of the grant of the patent: **11.03.2020**
(21) Application number: 16776005.7
(22) Date of filing: 08.01.2016
(51) Int. Cl.: H04W 72/12, H04W 88/12, H04W 92/20, H04W 76/10, H04W 92/12

(54) **DATA TRANSMISSION METHOD AND DEVICE**
DATENÜBERTRAGUNGSVERFAHREN UND -VORRICHTUNG
PROCÉDÉ ET DISPOSITIF DE TRANSMISSION DE DONNÉES

(30) Priority: 08.04.2015 CN 201510164513
(43) Date of publication of application: 24.01.2018
(73) Proprietor: Huawei Technologies Co., Ltd., Longgang District Shenzhen, Guangdong 518129 (CN)
(72) Inventor: WEN, Li, Shenzhen Guangdong 518129 (CN); YANG, Jianjun, Shenzhen Guangdong 518129 (CN)
(74) Representative: Körber, Martin Hans
(86) International application number: PCT/CN2016/070469
(87) International publication number: WO 2016/161829

(56) References cited:
- EP-A1- 3 062 458
- EP-A2- 2 525 623
- CN-A- 104 284 437
- CN-A- 104 349 483
- CN-A- 104 429 111
- US-A1- 2012 281 564
- US-A1- 2014 334 439

## Description

### TECHNICAL FIELD

Embodiments of the present invention relate to the field of communications technologies, and in particular, to a data transmission method and apparatus.

### BACKGROUND

In a Long Term Evolution (English: Long Term Evolution, LTE for short) system, a network capacity can be improved by using a macro-micro coordination technology. Macro-micro coordination means that a macro base station (English: Macro Base Station) and a micro base station (English: Micro Base Station) mutually coordinate to jointly provide a service for user equipment. The micro base station may also be referred to as a small base station (English: Small Base Station). A main difference between the macro base station and the micro base station lies in transmit power or coverage. Usually, transmit power or coverage of the macro base station is far greater than that of the micro base station. For example, the small base station is additionally deployed in the LTE system, and the small base station shares a part of transmission services of the macro base station, so as to improve the network capacity. In the field of wireless technologies, the small base station or the micro base station may be commonly referred to as a small cell.

In a macro-micro coordination transmission mode, a related network architecture is as follows: The macro base station and the small cell are separately connected to a network element of a core network by using a bearer network, and the network element of the core network is usually a mobility management entity (English: Mobility Management Entity, MME for short) or a serving gateway (English: Serving Gateway, S-GW for short); and the macro base station and the small cell are further separately connected to the user equipment (English: User Equipment, UE for short). In a macro-micro coordination process, the macro base station and the small cell mutually coordinate to transmit data for the UE.
Related technology according to the preambles of claims 1 and 8 is disclosed in EP 2 525 623 A1.

In a process of implementing embodiments of the present invention, the inventor finds that the foregoing technology has at least the following problem: In the macro-micro coordination process, when data is transmitted between the macro base station and the small cell, a delay of transmission between the macro base station and the small cell is relatively long, and macro-micro coordination performance is affected.

### SUMMARY

To resolve a problem, in the foregoing technology in a macro-micro coordination transmission mode, that a delay of transmission between a macro base station and a small cell is relatively long and macro-micro coordination performance is affected, embodiments of the present invention provide a data transmission method and apparatus that are applicable to a network of macro-micro coordination among base stations. The technical solutions are as follows:

According to a first aspect, a data transmission method is provided, where the method includes:
separately establishing, by a node, a connection to a macro base station and a small cell, where the node, the macro base station, and the small cell are located in a same access network, and the connection is an X2 connection or a user-defined logical connection; and scheduling, by the node, coordinated data, where the coordinated data is data cooperatively transmitted by the macro base station and the small cell for user equipment, wherein the method further includes:
receiving, by the node, first connection information from the macro base station, and receiving second connection information from the small cell, where the first connection information is used to indicate quality of a network connection between the macro base station and the user equipment, and the second connection information is used to indicate quality of a network connection between the small cell and the user equipment;
determining, by the node according to the first connection information and the second connection information, whether the macro base station and the small cell need to perform coordinated transmission for the user equipment; and
if coordinated transmission is required, sending, by the node, a coordinated transmission indication to the macro base station and/or the small cell.

In a first possible implementation of the first aspect, the scheduling, by the node, coordinated data includes:
receiving, by the node from a network element of a core network, downlink data that is to be sent to the user equipment; and
when the downlink data is the coordinated data that needs to be cooperatively transmitted by the macro base station and the small cell, sending, by the node to the macro base station, data that is in the downlink data and that needs to be transmitted by the macro base station, and sending, to the small cell, data that is in the downlink data and that needs to be transmitted by the small cell.

With reference to the first possible implementation of the first aspect, in a second possible implementation of the first aspect, after the receiving, by the node from a network element of a core network, downlink data that is to be sent to the user equipment, the method further includes:
when the downlink data is data that needs to be independently transmitted by the macro base station, sending, by the node, the downlink data to the macro base station; or when the downlink data is data that needs to be independently transmitted by the small cell, sending, by the node, the downlink data to the small cell.

With reference to the first aspect, in a third possible implementation of the first aspect, the scheduling, by the node, coordinated data includes:
receiving, by the node, first uplink data from the macro base station, and receiving second uplink data from the small cell;
when the first uplink data and the second uplink data are the coordinated data that needs to be cooperatively transmitted by the macro base station and the small cell, consolidating, by the node, the first uplink data and the second uplink data to obtain third uplink data; and
sending, by the node, the third uplink data to a network element of a core network.

With reference to the third possible implementation of the first aspect, in a fourth possible implementation of the first aspect, after the receiving, by the node, first uplink data from the macro base station, and receiving second uplink data from the small cell, the method further includes:
when the first uplink data is data that needs to be independently transmitted by the macro base station, directly sending, by the node, the first uplink data to the network element of the core network; and/or
when the second uplink data is data that needs to be independently transmitted by the small cell, directly sending, by the node, the second uplink data to the network element of the core network.

With reference to the first possible implementation of the first aspect, the second possible implementation of the first aspect, the third possible implementation of the first aspect, or the fourth possible implementation of the first aspect, in a fifth possible implementation of the first aspect, the method further includes:
establishing, by the node, an S1 connection to the network element of the core network.

With reference to the first aspect, in a sixth possible implementation of the first aspect, the scheduling, by the node, coordinated data includes:
receiving, by the node from the macro base station, data that is in the coordinated data and that needs to be transmitted by the small cell, and forwarding, to the small cell, the data that needs to be transmitted by the small cell; or
receiving, by the node from the small cell, data that is in the coordinated data and that needs to be transmitted by the macro base station, and forwarding, to the macro base station, the data that needs to be transmitted by the macro base station.

According to a second aspect, a data transmission apparatus is provided, and is applied to a node, where the apparatus includes:
a first establishing module, configured to separately establish a connection to a macro base station and a small cell, where the node, the macro base station, and the small cell are located in a same access network, and the connection is an X2 connection or a user-defined logical connection; and a scheduling module, configured to schedule coordinated data, where the coordinated data is data cooperatively transmitted by the macro base station and the small cell for user equipment, wherein the apparatus further includes:
a receiving module, configured to receive first connection information from the macro base station, and receive second connection information from the small cell, where the first connection information is used to indicate quality of a network connection between the macro base station and the user equipment, and the second connection information is used to indicate quality of a network connection between the small cell and the user equipment;
a determining module, configured to determine, according to the first connection information and the second connection information, whether the macro base station and the small cell need to perform coordinated transmission for the user equipment; and
a sending module, configured to: when it is determined that coordinated transmission is required, send a coordinated transmission indication to the macro base station and/or the small cell.

In a first possible implementation of the second aspect, the scheduling module includes: a first receiving unit and a first sending unit, where
the first receiving unit is configured to receive, from a network element of a core network, downlink data that is to be sent to the user equipment; and
the first sending unit is configured to: when the downlink data is the coordinated data that needs to be cooperatively transmitted by the macro base station and the small cell, send, to the macro base station, data that is in the downlink data and that needs to be transmitted by the macro base station, and send, to the small cell, data that is in the downlink data and that needs to be transmitted by the small cell.

With reference to the first possible implementation of the second aspect, in a second possible implementation of the second aspect, the scheduling module further includes: a second sending unit and a third sending unit, where
the second sending unit is configured to: when the downlink data is data that needs to be independently transmitted by the macro base station, send the downlink data to the macro base station; and
the third sending unit is configured to: when the downlink data is data that needs to be independently transmitted by the small cell, send the downlink data to the small cell.

With reference to the second aspect, in a third possible implementation of the second aspect, the scheduling module includes: a second receiving unit, a consolidation unit, and a fourth sending unit, where
the second receiving unit is configured to receive first uplink data from the macro base station, and receive second uplink data from the small cell;
the consolidation unit is configured to: when the first uplink data and the second uplink data are the coordinated data that needs to be cooperatively transmitted by the macro base station and the small cell, consolidate the first uplink data and the second uplink data to obtain third uplink data; and
the fourth sending unit is configured to send the third uplink data to a network element of a core network.

With reference to the third possible implementation of the second aspect, in a fourth possible implementation of the second aspect, the scheduling module further includes: a fifth sending unit and a sixth sending unit, where
the fifth sending unit is configured to: when the first uplink data is data that needs to be independently transmitted by the macro base station, directly send the first uplink data to the network element of the core network; and
the sixth sending unit is configured to: when the second uplink data is data that needs to be independently transmitted by the small cell, directly send the second uplink data to the network element of the core network.

With reference to the first possible implementation of the second aspect, the second possible implementation of the second aspect, the third possible implementation of the second aspect, or the fourth possible implementation of the second aspect, in a fifth possible implementation of the second aspect, the apparatus further includes:
a second establishing module, configured to establish an S1 connection to the network element of the core network.

With reference to the second aspect, in a sixth possible implementation of the second aspect, the scheduling module includes: a first forwarding unit and/or a second forwarding unit, where
the first forwarding unit is configured to: receive, from the macro base station, data that is in the coordinated data and that needs to be transmitted by the small cell, and forward, to the small cell, the data that needs to be transmitted by the small cell; and
the second forwarding unit is configured to: receive, from the small cell, data that is in the coordinated data and that needs to be transmitted by the macro base station, and forward, to the macro base station, the data that needs to be transmitted by the macro base station.

According to a third aspect, a data transmission apparatus is provided, and is applied to a node, where the apparatus includes: a processor and a memory, where the memory is configured to store one or more instructions, and the instruction is configured to be executed by the processor;
the processor is configured to separately establish a connection to a macro base station and a small cell, where the node, the macro base station, and the small cell are located in a same access network, and the connection is an X2 connection or a user-defined logical connection; and
the processor is further configured to schedule coordinated data, where the coordinated data is data cooperatively transmitted by the macro base station and the small cell for user equipment.

In a first possible implementation of the third aspect, the apparatus further includes: a transceiver, where
the transceiver is configured to receive, from a network element of a core network, downlink data that is to be sent to the user equipment; and
the transceiver is further configured to: when the downlink data is the coordinated data that needs to be cooperatively transmitted by the macro base station and the small cell, send, to the macro base station, data that is in the downlink data and that needs to be transmitted by the macro base station, and send, to the small cell, data that is in the downlink data and that needs to be transmitted by the small cell.

With reference to the first possible implementation of the third aspect, in a second possible implementation of the third aspect,
the transceiver is further configured to: when the downlink data is data that needs to be independently transmitted by the macro base station, send the downlink data to the macro base station; and
the transceiver is further configured to: when the downlink data is data that needs to be independently transmitted by the small cell, send the downlink data to the small cell.

With reference to the third aspect, in a third possible implementation of the third aspect, the apparatus further includes: a transceiver, where
the transceiver is configured to receive first uplink data from the macro base station, and receive second uplink data from the small cell;
the processor is further configured to: when the first uplink data and the second uplink data are the coordinated data that needs to be cooperatively transmitted by the macro base station and the small cell, consolidate the first uplink data and the second uplink data to obtain third uplink data; and
the transceiver is further configured to send the third uplink data to a network element of a core network.

With reference to the third possible implementation of the third aspect, in a fourth possible implementation of the third aspect,
the transceiver is further configured to: when the first uplink data is data that needs to be independently transmitted by the macro base station, directly send the first uplink data to the network element of the core network; and
the transceiver is further configured to: when the second uplink data is data that needs to be independently transmitted by the small cell, directly send the second uplink data to the network element of the core network.

With reference to the first possible implementation of the third aspect, the second possible implementation of the third aspect, the third possible implementation of the third aspect, or the fourth possible implementation of the third aspect, in a fifth possible implementation of the third aspect,
the processor is further configured to establish an S1 connection to the network element of the core network.

With reference to the third aspect, in a sixth possible implementation of the third aspect, the apparatus further includes: a transceiver, where
the transceiver is configured to: receive, from the macro base station, data that is in the coordinated data and that needs to be transmitted by the small cell, and forward, to the small cell, the data that needs to be transmitted by the small cell; and/or
the transceiver is configured to: receive, from the small cell, data that is in the coordinated data and that needs to be transmitted by the macro base station, and forward, to the macro base station, the data that needs to be transmitted by the macro base station.

With reference to the third aspect, the first possible implementation of the third aspect, the second possible implementation of the third aspect, the third possible implementation of the third aspect, the fourth possible implementation of the third aspect, the fifth possible implementation of the third aspect, or the sixth possible implementation of the third aspect, in a seventh possible implementation of the third aspect, the apparatus further includes: a transceiver, where
the transceiver is configured to receive first connection information from the macro base station, and receive second connection information from the small cell, where the first connection information is used to indicate quality of a network connection between the macro base station and the user equipment, and the second connection information is used to indicate quality of a network connection between the small cell and the user equipment;
the processor is further configured to determine, according to the first connection information and the second connection information, whether the macro base station and the small cell need to perform coordinated transmission for the user equipment; and
the transceiver is further configured to: when it is determined that coordinated transmission is required, send a coordinated transmission indication to the macro base station and/or the small cell.

Beneficial effects brought by the technical solutions provided in the embodiments of the present invention include at least the following items:

A node is additionally deployed in an access network, and the node schedules coordinated data in a macro-micro coordination process, so as to resolve a problem, in a related technology in a macro-micro coordination transmission mode, that a delay of transmission between a macro base station and a small cell is relatively long and macro-micro coordination performance is affected because data needs to be transmitted back to a network element of a core network from an access network in which the base station is located, and then forwarded by the network element of the core network. Therefore, the delay of transmission between the macro base station and the small cell is shortened, and the macro-micro coordination performance is improved.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of an implementation environment in an embodiment of the present invention;
FIG. 2 is a flowchart of a data transmission method applicable to a network of macro-micro coordination among base stations according to an embodiment of the present invention;
FIG. 3 is a schematic diagram of a network architecture in an embodiment of the present invention;
FIG. 4 is a flowchart of a data transmission method applicable to a network of macro-micro coordination among base stations according to another embodiment of the present invention;
FIG. 5 is a flowchart of a decision-making process of macro-micro coordination in an embodiment of the present invention;
FIG. 6 is a flowchart of a data transmission method applicable to a network of macro-micro coordination among base stations according to another embodiment of the present invention;
FIG. 7 is a schematic diagram of another network architecture in an embodiment of the present invention;
FIG. 8A and FIG. 8B are a flowchart of a data transmission method applicable to a network of macro-micro coordination among base stations according to an example not covered by the present invention;
FIG. 9A and FIG. 9B are a flowchart of a data transmission method applicable to a network of macro-micro coordination among base stations according to another embodiment of the present invention;
FIG. 10 is a structural block diagram of a data transmission apparatus applicable to a network of macro-micro coordination among base stations according to an embodiment of the present invention;
FIG. 11 is a structural block diagram of a data transmission apparatus applicable to a network of macro-micro coordination among base stations according to another embodiment of the present invention;
FIG. 12 is a structural block diagram of a data transmission apparatus applicable to a network of macro-micro coordination among base stations according to another embodiment of the present invention; and
FIG. 13 is a schematic structural diagram of a data transmission apparatus applicable to a network of macro-micro coordination among base stations according to another embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

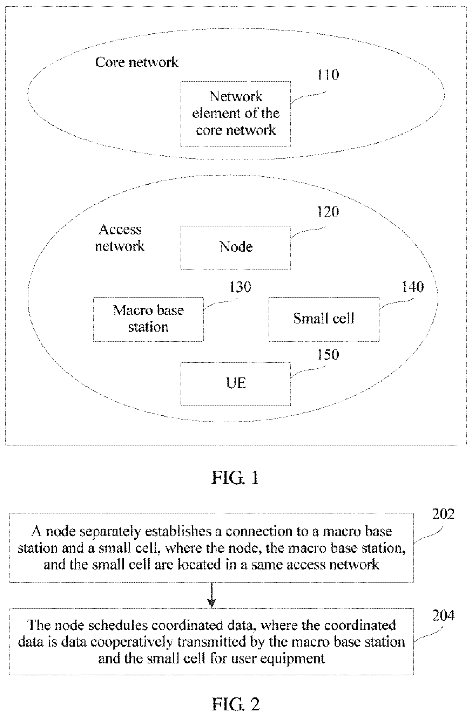

Referring to FIG. 1, FIG. 1 shows a schematic structural diagram of an implementation environment in an embodiment of the present invention. The implementation environment may include a core network and an access network. The implementation environment may be applied to an environment of a network of macro-micro coordination among base stations in an LTE system, an LTE-A (English: LTE-Advanced) system, or another communications system. Details are as follows:

The core network includes at least one network element 110 of the core network. The network element 110 of the core network may be an MME or an S-GW.

The access network includes a node 120, a macro base station 130, a small cell 140, and at least one UE 150. The macro base station 130 and the small cell 140 mutually coordinate to transmit data for the UE 150. The node 120 is separately connected to the macro base station 130 and the small cell 140 by using a wired network or a wireless network. The node 120 may be an independent device, or the node 120 may be a functional entity integrated into the macro base station 130 or the small cell 140. For example, the node 120 may be a functional entity integrated into a baseband unit (English: Baseband Unit, BBU for short) of the macro base station 130.

Optionally, a bearer network (not shown in the figure) is further deployed between the core network and the access network.

Referring to FIG. 2, FIG. 2 shows a flowchart of a data transmission method applicable to a network of macro-micro coordination among base stations according to an embodiment of the present invention. That the data transmission method is applied to the node 120 in the implementation environment shown in FIG. 1 is used as an example for description in this embodiment. The data transmission method may include the following several steps:

Step 202: A node separately establishes a connection to a macro base station and a small cell, where the node, the macro base station, and the small cell are located in a same access network.

Step 204: The node schedules coordinated data, where the coordinated data is data cooperatively transmitted by the macro base station and the small cell for user equipment.

In this embodiment, the node is additionally deployed in the access network. The node is separately connected to the macro base station and the small cell by using a wired network or a wireless network. In addition, to ensure that the node can separately communicate with the macro base station and the small cell, the node separately establishes a logical connection to the macro base station and the small cell, and the logical connection is an X2 connection or a user-defined logical connection. Based on the foregoing network connection and logical connection, the node schedules coordinated data in a macro-micro coordination process, and the coordinated data is the data cooperatively transmitted by the macro base station and the small cell for the UE.

In conclusion, in the data transmission method provided in this embodiment, a node is additionally deployed in an access network, and the node schedules coordinated data in a macro-micro coordination process, so as to resolve a problem, in a related technology in a macro-micro coordination transmission mode, that a delay of transmission between a macro base station and a small cell is relatively long and macro-micro coordination performance is affected because data needs to be transmitted back to a network element of a core network from an access network in which the base station is located, and then forwarded by the network element of the core network. Therefore, the delay of transmission between the macro base station and the small cell is shortened, and the macro-micro coordination performance is improved.

In the technical solutions provided in the embodiments of the present invention, a node mainly has the following two functions: (1) an aggregation function, and (2) a forwarding function. The following first describes the aggregation function.

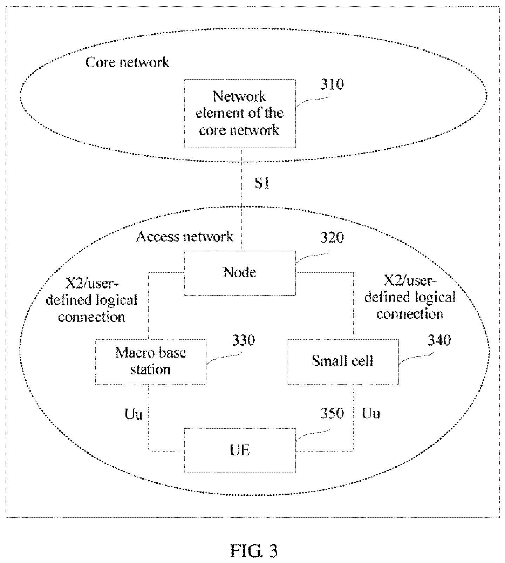

Referring to FIG. 3, FIG. 3 shows a schematic diagram of a network architecture in an embodiment of the present invention. As shown in FIG. 3, an S1 connection is established between a node 320 and a network element 310 of a core network, an X2 connection or a user-defined logical connection is established between the node 320 and a macro base station 330, an X2 connection or a user-defined logical connection is established between the node 320 and a small cell 340, and a Uu connection is established between the macro base station 330 or the small cell 340 and UE 350. In the network architecture shown in FIG. 3, the node 320 has an aggregation function.

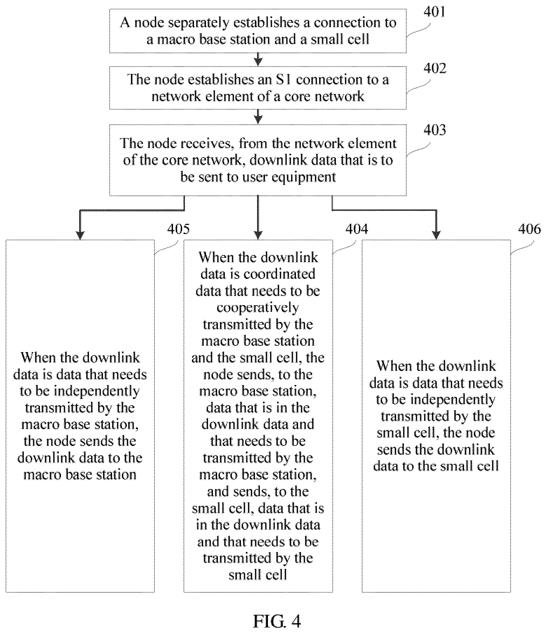

Referring to FIG. 4, FIG. 4 shows a flowchart of a data transmission method applicable to a network of macro-micro coordination among base stations according to another embodiment of the present invention. That the data transmission method is applied to the network architecture shown in FIG. 3 is used as an example for description in this embodiment. The data transmission method may include the following several steps.

Step 401: A node separately establishes a connection to a macro base station and a small cell.

The node, the macro base station, and the small cell are located in a same access network. The node is separately connected to the macro base station and the small cell by using a wired network or a wireless network. In addition, to ensure that the node can separately communicate with the macro base station and the small cell, the node separately establishes a logical connection to the macro base station and the small cell, and the logical connection is an X2 connection or a user-defined logical connection.

That an X2 connection is established between the node and the macro base station is used as an example, and it is assumed that an initiator establishing the X2 connection is the macro base station. The macro base station sends an X2 setup request message to the node, and the X2 setup request message may carry initial connection information related to a transport network layer of the macro base station. Accordingly, the node receives the X2 setup request message sent by the macro base station, and replies by feeding back an X2 setup response message to the macro base station. The X2 setup response message may carry initial connection information related to a transport network layer of the node. After the macro base station successfully receives the X2 setup response message, the macro base station successfully establishes the X2 connection to the node. Certainly, in another possible implementation, an initiator that establishes the logical connection between the node and the macro base station may be the node. In addition, a process in which the node establishes the logical connection to the small cell is the same as the foregoing process, and details are not described herein.

Step 402: The node establishes an S1 connection to a network element of a core network.

In this embodiment, the S1 connection is established between the node and the network element of the core network, and based on the S1 connection, the node communicates with the network element of the core network.

In addition, for a process in which the S1 connection is established between the node and the network element of the core network, refer to a process, in a related technology, in which an S1 connection is established between a base station and a network element of a core network. This part of content is well-known to a person skilled in the art, and is not described in this embodiment.

It should be noted that, the foregoing step 402 may be performed before step 401, or may be performed after step 401, or may be simultaneously performed with step 401, and this is not limited in this embodiment.

Step 403: The node receives, from the network element of the core network, downlink data that is to be sent to user equipment.

The node receives, from the network element of the core network by using the S1 connection, the downlink data that is to be sent to the user equipment.

What is different from the related technology is as follows: In the related technology, a network element of a core network sends, to a macro base station, downlink data that is to be sent to user equipment, and the macro base station then decides whether macro-micro coordination needs to be performed. When macro-micro coordination needs to be performed, the macro base station sends, to the network element of the core network (for example, a switch, a router, or an MME/S-GW of the core network), data that is in the downlink data and that needs to be transmitted by a small cell, and the network element of the core network forwards, to the small cell, the data that needs to be transmitted by the small cell. Therefore, in the related technology, there is a problem that a delay of transmission between the macro base station and the small cell is relatively long and macro-micro coordination performance is affected.

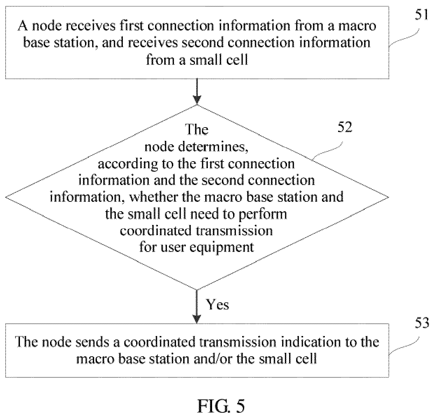

However, in this embodiment, the network element of the core network sends, to the node, the downlink data that is to be sent to the user equipment, and then the node makes a macro-micro coordination decision and performs downlink data distribution. As shown in FIG. 5, the node may perform the following several steps to decide whether macro-micro coordination needs to be performed.

Step 51: The node receives first connection information from the macro base station, and receives second connection information from the small cell.

The first connection information is used to indicate quality of a network connection between the macro base station and the user equipment, and the first connection information usually includes first received signal strength between the macro base station and the user equipment. The second connection information is used to indicate quality of a network connection between the small cell and the user equipment, and the second connection information usually includes second received signal strength between the small cell and the user equipment. In an LTE system, a key parameter of received signal strength is reference signal received power (English: Reference Signal Received Power, RSRP for short).

In addition, the macro base station and the small cell may actively report connection information to the node, for example, report the connection information to the node at a preset time interval; or after receiving a reporting indication sent by the node, the macro base station and the small cell may report connection information to the node according to the reporting indication.

Step 52: The node determines, according to the first connection information and the second connection information, whether the macro base station and the small cell need to perform coordinated transmission for the user equipment.

Received signal strength reflects a distance between a base station and user equipment. In a possible implementation, the node calculates an absolute value of a difference between the first received signal strength and the second received signal strength, and compares the absolute value of the difference with a preset threshold. When the absolute value of the difference is less than the preset threshold, it indicates that a distance between the macro base station and the user equipment is approximately equal to a distance between the small cell and the user equipment, that is, the user equipment is located at an edge of a cell. In this case, a decision is to perform macro-micro coordination. When deciding that macro-micro coordination is to be performed, the node performs the following step 404.

In addition, when the absolute value of the difference is greater than the preset threshold, the node decides that macro-micro coordination is not to be performed, and the macro base station or the small cell is independently in charge of transmission. Further, when deciding that macro-micro coordination is not to be performed, the node may further decide, according to the first connection information and the second connection information, whether the macro base station or the small cell is independently in charge of transmitting the downlink data. When a decision result is that the macro base station is independently in charge of transmitting the downlink data, the node performs the following step 405; or when a decision result is that the small cell is independently in charge of transmitting the downlink data, the node performs the following step 406.

In addition, types of macro-micro coordination include, but are not limited to, joint transmission (English: Joint Transmission, JT for short), coordinated scheduling (English: Coordinated Scheduling, CS for short), beamforming (English: Beamforming, BF for short), dynamic cell selection, carrier aggregation (English: Carrier Aggregation, CA for short), dual connectivity (English: Dual Connectivity), and the like.

Optionally, when deciding that macro-micro coordination is to be performed, the node may further perform the following step 53.

Step 53: The node sends a coordinated transmission indication to the macro base station and/or the small cell.

The coordinated transmission indication is used to instruct the macro base station and the small cell to cooperatively transmit the foregoing downlink data to the user equipment.

Optionally, the coordinated transmission indication may carry indication information about a type of macro-micro coordination, so that the macro base station and/or the small cell determine/determines the type of macro-micro coordination according to the indication information.

Step 404: When the downlink data is coordinated data that needs to be cooperatively transmitted by the macro base station and the small cell, the node sends, to the macro base station, data that is in the downlink data and that needs to be transmitted by the macro base station, and sends, to the small cell, data that is in the downlink data and that needs to be transmitted by the small cell.

When the decision is to perform macro-micro coordination, the foregoing downlink data is the coordinated data that needs to be cooperatively transmitted by the macro base station and the small cell. The coordinated data is data cooperatively transmitted by the macro base station and the small cell for the user equipment. In this case, the node sends, to the macro base station, the data that is in the downlink data and that needs to be transmitted by the macro base station, and sends, to the small cell, the data that is in the downlink data and that needs to be transmitted by the small cell. According to a different type of macro-micro coordination, the data that needs to be transmitted by the macro base station may be all or a part of data in the downlink data, and the data that needs to be transmitted by the small cell may also be all or a part of data in the downlink data. In addition, the type of macro-micro coordination may be preset by a system, or may be set in real time according to an actual transmission environment, and this is not limited in this embodiment.

Accordingly, the macro base station receives, from the node, the data that is in the downlink data and that needs to be transmitted by the macro base station, and sends, to the user equipment, the data that is in the downlink data and that needs to be transmitted by the macro base station. In addition, the small cell receives, from the node, the data that is in the downlink data and that needs to be transmitted by the small cell, and sends, to the user equipment, the data that is in the downlink data and that needs to be transmitted by the small cell.

Step 405: When the downlink data is data that needs to be independently transmitted by the macro base station, the node sends the downlink data to the macro base station.

When deciding that the macro base station is independently in charge of transmitting the downlink data, the node transparently transmits the downlink data to the macro base station. Accordingly, the macro base station receives the downlink data from the node, and sends the downlink data to the user equipment.

Step 406: When the downlink data is data that needs to be independently transmitted by the small cell, the node sends the downlink data to the small cell.

When deciding that the small cell is independently in charge of transmitting the downlink data, the node transparently transmits the downlink data to the small cell. Accordingly, the small cell receives the downlink data from the node, and sends the downlink data to the user equipment.

It should be noted that, in this embodiment, that the node decides whether macro-micro coordination is to be performed is used only as an example for description. In another possible implementation, the macro base station or the small cell may decide whether macro-micro coordination is to be performed. That the macro base station decides whether macro-micro coordination is to be performed is used as an example. The macro base station obtains the first connection information and the second connection information, and the second connection information is forwarded from the small cell to the macro base station by using the node. The macro base station decides, according to the first connection information and the second connection information, whether macro-micro coordination is to be performed. If macro-micro coordination is required, the macro base station sends a coordinated transmission indication to the node; or if macro-micro coordination is not required, the macro base station further decides whether the macro base station or the small cell is independently in charge of transmission, and sends a decision result to the node, so that the node transparently transmits the downlink data to a specified base station according to the decision result.

In conclusion, in the data transmission method provided in this embodiment, a node is additionally deployed in an access network, and the node schedules coordinated data in a macro-micro coordination process, so as to resolve a problem, in a related technology in a macro-micro coordination transmission mode, that a delay of transmission between a macro base station and a small cell is relatively long and macro-micro coordination performance is affected. Therefore, the delay of transmission between the macro base station and the small cell is shortened, and the macro-micro coordination performance is improved.

In addition, the node further aggregates downlink data sent by a network element of a core network to user equipment. When the downlink data is the coordinated data that needs to be cooperatively transmitted by the macro base station and the small cell, the node directly delivers, to the macro base station and the small cell, data that needs to be respectively transmitted by the two base stations, so that the data does not need to be forwarded between the two base stations for transmission, so as to avoid time consumption caused by data forwarding and fully improve macro-micro coordination efficiency and the macro-micro coordination performance.

In addition, the node further decides whether macro-micro coordination is to be performed, and the node shares a macro-micro coordination decision-making function and a macro-micro coordination scheduling function of the base station, thereby reducing processing overheads of the base station.

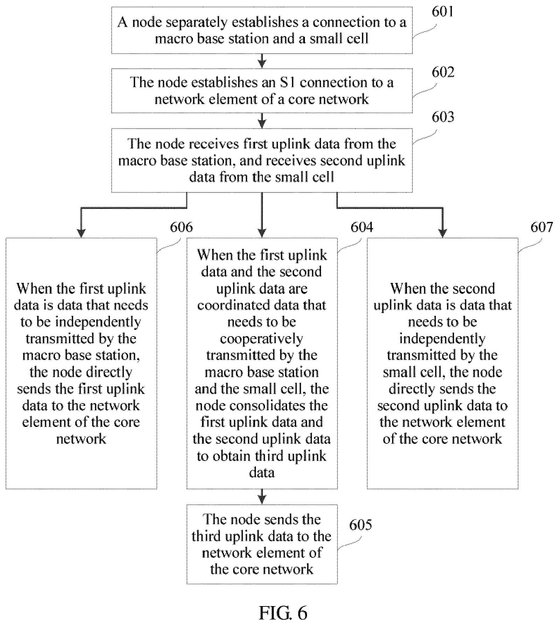

In the foregoing embodiment shown in FIG. 4, a downlink transmission process is described. In the following embodiment shown in FIG. 6, an uplink transmission process is described.

Referring to FIG. 6, FIG. 6 shows a flowchart of a data transmission method applicable to a network of macro-micro coordination among base stations according to another embodiment of the present invention. That the data transmission method is applied to the network architecture shown in FIG. 3 is still used as an example for description in this embodiment. The data transmission method may include the following several steps.

Step 601: A node separately establishes a connection to a macro base station and a small cell.

The node, the macro base station, and the small cell are located in a same access network. The node is separately connected to the macro base station and the small cell by using a wired network or a wireless network. In addition, to ensure that the node can separately communicate with the macro base station and the small cell, the node separately establishes a logical connection to the macro base station and the small cell, and the logical connection is an X2 connection or a user-defined logical connection.

Step 602: The node establishes an S1 connection to a network element of a core network.

The S1 connection is established between the node and the network element of the core network, and based on the S1 connection, the node communicates with the network element of the core network.

It should be noted that, the foregoing step 602 may be performed before step 601, or may be performed after step 601, or may be simultaneously performed with step 601, and this is not limited in this embodiment.

Step 603: The node receives first uplink data from the macro base station, and receives second uplink data from the small cell.

The first uplink data is received by the macro base station from user equipment, and the first uplink data is sent by the user equipment to the network element of the core network. The second uplink data is received by the small cell from the user equipment, and the second uplink data is sent by the user equipment to the network element of the core network.

In addition, the node may determine, according to a packet parameter of the first uplink data and a packet parameter of the second uplink data, whether the first uplink data and the second uplink data are coordinated data that is cooperatively transmitted by the macro base station and the small cell for the user equipment to the network element of the core network, or the first uplink data is data that is independently transmitted by the macro base station for the user equipment to the network element of the core network, or the second uplink data is data that is independently transmitted by the small cell for the user equipment to the network element of the core network. In the foregoing first case, the node performs the following step 604 and step 605; or in the foregoing second case, the node performs the following step 606; or in the foregoing third case, the node performs the following step 607.

Step 604: When the first uplink data and the second uplink data are coordinated data that needs to be cooperatively transmitted by the macro base station and the small cell, the node consolidates the first uplink data and the second uplink data to obtain third uplink data.

Step 605: The node sends the third uplink data to the network element of the core network.

When the first uplink data and the second uplink data are the coordinated data that is transmitted by the macro base station and the small cell by means of macro-micro coordination, the node consolidates the first uplink data and the second uplink data to obtain the third uplink data. According to a different type of macro-micro coordination, the first uplink data may be all or a part of data in the third uplink data, and the second uplink data may also be all or a part of data in the third uplink data.

Then, the node sends the third uplink data to the network element of the core network by using the S1 connection established to the network element of the core network. Accordingly, the network element of the core network receives the third uplink data sent by the node.

Step 606: When the first uplink data is data that needs to be independently transmitted by the macro base station, the node directly sends the first uplink data to the network element of the core network.

The node transparently transmits the first uplink data to the network element of the core network by using the S1 connection. Accordingly, the network element of the core network receives the first uplink data sent by the node.

Step 607: When the second uplink data is data that needs to be independently transmitted by the small cell, the node directly sends the second uplink data to the network element of the core network.

The node transparently transmits the second uplink data to the network element of the core network by using the S1 connection. Accordingly, the network element of the core network receives the second uplink data sent by the node.

In addition, in this embodiment, the node may decide whether macro-micro coordination needs to be performed in the uplink transmission process. Similar to the decision-making process provided in the embodiment shown in FIG. 4, a decision-making process is as follows: The node receives first connection information from the macro base station, and receives second connection information from the small cell; the first connection information is used to indicate quality of a network connection between the macro base station and the user equipment, and the second connection information is used to indicate quality of a network connection between the small cell and the user equipment; the node determines, according to the first connection information and the second connection information, whether the macro base station and the small cell need to perform coordinated transmission; and if coordinated transmission is required, the node sends a coordinated transmission indication to the macro base station and the small cell, and the coordinated transmission indication is used to instruct the macro base station and the small cell to cooperatively transmit the uplink data to the network element of the core network for the user equipment. Certainly, in another possible implementation, the node may forward the second connection information of the small cell to the macro base station, and the macro base station decides whether macro-micro coordination needs to be performed in the uplink transmission process; or the node may forward the first connection information of the macro base station to the small cell, and the small cell decides whether macro-micro coordination needs to be performed in the uplink transmission process.

In conclusion, in the data transmission method provided in this embodiment, a node is additionally deployed in an access network, and the node schedules coordinated data in a macro-micro coordination process, so as to resolve a problem, in a related technology in a macro-micro coordination transmission mode, that a delay of transmission between a macro base station and a small cell is relatively long and macro-micro coordination performance is affected. Therefore, the delay of transmission between the macro base station and the small cell is shortened, and the macro-micro coordination performance is improved.

In addition, in an uplink transmission process, the node aggregates the coordinated data that is cooperatively transmitted by the macro base station and the small cell for user equipment to a network element of a core network, so that the coordinated data does not need to be forwarded between the macro base station and the small cell for transmission, so as to avoid time consumption caused by data forwarding and fully improve macro-micro coordination efficiency and the macro-micro coordination performance.

In addition, the node further decides whether macro-micro coordination is to be performed, and the node shares a macro-micro coordination decision-making function and a macro-micro coordination scheduling function of the base station, thereby reducing processing overheads of the base station.

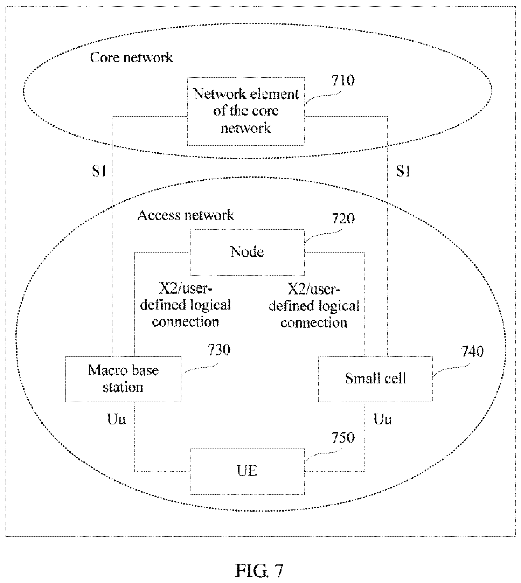

Referring to FIG. 7, FIG. 7 shows a schematic diagram of another network architecture in an embodiment of the present invention. As shown in FIG. 7, an X2 connection or a user-defined logical connection is established between a node 720 and a macro base station 730, an X2 connection or a user-defined logical connection is established between the node 720 and a small cell 740, the macro base station 730 and the small cell 740 separately establish an S1 connection to a network element 710 of a core network, and the macro base station 730 or the small cell 740 establishes a Uu connection to UE 750. In the network architecture shown in FIG. 7, the node 720 has a forwarding function.

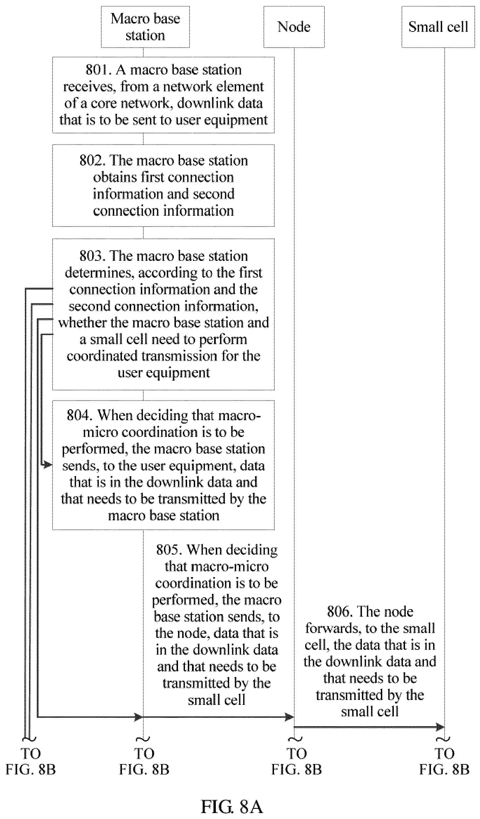

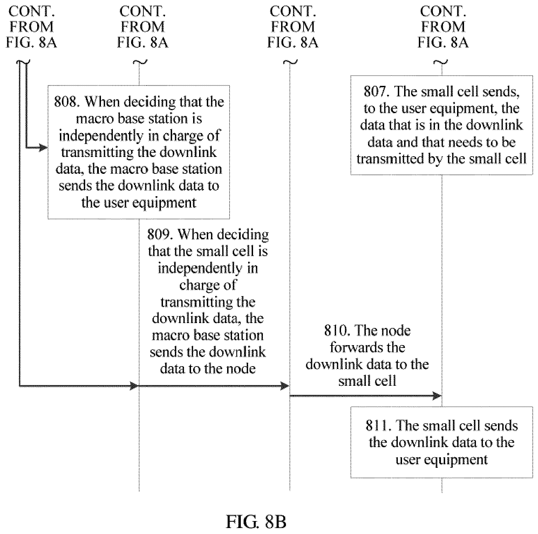

Referring to FIG. 8A and FIG. 8B, FIG. 8A and FIG. 8B show a flowchart of a data transmission method applicable to a network of macro-micro coordination among base stations according to an example not covered by the present invention. That the data transmission method is applied to the network architecture shown in FIG. 7 is used as an example for description in this example. The data transmission method may include the following several steps.

Step 801: A macro base station receives, from a network element of a core network, downlink data that is to be sent to user equipment.

An S1 connection is established between the macro base station and the network element of the core network, and based on the S1 connection, the network element of the core network sends, to the macro base station, the downlink data that needs to be delivered to the user equipment. Accordingly, the macro base station receives, from the network element of the core network, the downlink data that is to be sent to the user equipment.

Step 802: The macro base station obtains first connection information and second connection information.

In this example, the macro base station decides whether macro-micro coordination is to be performed.

The macro base station obtains the first connection information, the first connection information is used to indicate quality of a network connection between the macro base station and the user equipment, and the first connection information usually includes first received signal strength between the macro base station and the user equipment. In addition, the macro base station obtains the second connection information, the second connection information is used to indicate quality of a network connection between a small cell and the user equipment, and the second connection information usually includes second received signal strength between the small cell and the user equipment. In an LTE system, a key parameter of received signal strength is RSRP.

With reference to the network architecture shown in FIG. 7, a node, the macro base station, and the small cell are located in a same access network. The node is separately connected to the macro base station and the small cell by using a wired network or a wireless network. In addition, to ensure that the node can separately communicate with the macro base station and the small cell, the node separately establishes a logical connection to the macro base station and the small cell, and the logical connection is an X2 connection or a user-defined logical connection. After obtaining the second connection information, the small cell may use the node to forward the second connection information to the macro base station. Because the second connection information is directly forwarded in the access network without a requirement of forwarding by the core network, time required for forwarding the second connection information is reduced.

Step 803: The macro base station determines, according to the first connection information and the second connection information, whether the macro base station and a small cell need to perform coordinated transmission for the user equipment.

Received signal strength reflects a distance between a base station and user equipment. In a possible implementation, the macro base station calculates an absolute value of a difference between the first received signal strength and the second received signal strength, and compares the absolute value of the difference with a preset threshold. When the absolute value of the difference is less than the preset threshold, it indicates that a distance between the macro base station and the user equipment is approximately equal to a distance between the small cell and the user equipment, that is, the user equipment is located at an edge of a cell. In this case, a decision is to perform macro-micro coordination. When deciding that macro-micro coordination is to be performed, the macro base station performs the following step 804 and step 805.

In addition, when the absolute value of the difference is greater than the preset threshold, the macro base station decides that macro-micro coordination is not to be performed, and the macro base station or the small cell is independently in charge of transmission. Further, when deciding that macro-micro coordination is not to be performed, the macro base station may further decide, according to the first connection information and the second connection information, whether the macro base station or the small cell is independently in charge of transmitting the downlink data. When a decision result is that the macro base station is independently in charge of transmitting the downlink data, the macro base station performs the following step 808; or when a decision result is that the small cell is independently in charge of transmitting the downlink data, the macro base station performs the following step 809.

Optionally, when deciding that macro-micro coordination is to be performed, the macro base station uses the node to forward a coordinated transmission indication to the small cell, and the coordinated transmission indication is used to notify the small cell that macro-micro coordination is to be performed.

In addition, types of macro-micro coordination include, but are not limited to, joint transmission, coordinated scheduling, beamforming, dynamic cell selection, carrier aggregation, dual connectivity, and the like.

Step 804: When deciding that macro-micro coordination is to be performed, the macro base station sends, to the user equipment, data that is in the downlink data and that needs to be transmitted by the macro base station.

Step 805: When deciding that macro-micro coordination is to be performed, the macro base station sends, to the node, data that is in the downlink data and that needs to be transmitted by the small cell.

When the decision is to perform macro-micro coordination, the foregoing downlink data is coordinated data that needs to be cooperatively transmitted by the macro base station and the small cell. The coordinated data is data cooperatively transmitted by the macro base station and the small cell for the user equipment. In this case, the macro base station sends, to the user equipment, the data that is in the downlink data and that needs to be transmitted by the macro base station, and sends, to the node, the data that is in the downlink data and that needs to be transmitted by the small cell. According to a different type of macro-micro coordination, the data that needs to be transmitted by the macro base station may be all or a part of data in the downlink data, and the data that needs to be transmitted by the small cell may also be all or a part of data in the downlink data. In addition, the type of macro-micro coordination may be preset by a system, or may be set in real time according to an actual transmission environment, and this is not limited in this embodiment.

In this example, the data that is in the downlink data and that needs to be transmitted by the small cell is forwarded from the macro base station to the small cell by using the node in the access network, without a requirement of forwarding by the core network, thereby fully shortening time required in the forwarding process.

In addition, a data packet sent by the macro base station to the node may further carry a device identifier corresponding to the small cell, in addition to the data that is in the downlink data and that needs to be transmitted by the small cell. The device identifier may be an IP (English: Internet Protocol; Chinese: Internet Protocol) address or a Global eNB ID (English: Global Evolved Node Base station Identity; Chinese: Global Evolved Node Base station Identity).

Accordingly, the node receives, from the macro base station, the data that is in the downlink data and that needs to be transmitted by the small cell.

It should be noted that, the foregoing step 805 may be performed before step 804, or may be performed after step 804, or may be simultaneously performed with step 804. This is not limited in this embodiment.

Step 806: The node forwards, to the small cell, the data that is in the downlink data and that needs to be transmitted by the small cell.

Optionally, the node may forward the data packet to the corresponding small cell according to the device identifier carried in the data packet sent by the macro base station, and the data packet carries the data that is in the downlink data and that needs to be transmitted by the small cell.

In another possible implementation, the node may store a mapping relationship between the macro base station and the small cell, and after receiving a data packet sent by the macro base station, the node forwards, according to the mapping relationship, the data packet to the small cell corresponding to the macro base station. The mapping relationship may be pre-stored by the node, or may be stored by the node after dynamic learning, and this is not limited in this embodiment.

Accordingly, the small cell receives, from the node, the data that is in the downlink data and that needs to be transmitted by the small cell.

Step 807: The small cell sends, to the user equipment, the data that is in the downlink data and that needs to be transmitted by the small cell.

After receiving the data that is forwarded by the node, that is in the downlink data, and that needs to be transmitted by the small cell, the small cell sends the data to the user equipment, thereby cooperatively sending the downlink data to the user equipment together with the macro base station.

Step 808: When deciding that the macro base station is independently in charge of transmitting the downlink data, the macro base station sends the downlink data to the user equipment.

When deciding that the macro base station is independently in charge of transmitting the downlink data, the macro base station independently sends the downlink data to the user equipment. Accordingly, the user equipment receives the downlink data from the macro base station.

Step 809: When deciding that the small cell is independently in charge of transmitting the downlink data, the macro base station sends the downlink data to the node.

When deciding that the small cell is independently in charge of transmitting the downlink data, the macro base station sends the downlink data to the node, and the node forwards the downlink data to the small cell. In addition to the downlink data, the data packet sent by the macro base station to the node may further carry a device identifier corresponding to the small cell.

Accordingly, the node receives the downlink data from the macro base station.

Step 810: The node forwards the downlink data to the small cell.

The node may forward the data packet to the corresponding small cell according to the device identifier carried in the data packet sent by the macro base station, and the data packet carries the downlink data.

Accordingly, the small cell receives the downlink data from the node.

Step 811: The small cell sends the downlink data to the user equipment.

After receiving the downlink data from the node, the small cell sends the downlink data to the user equipment. Accordingly, the user equipment receives the downlink data from the small cell.

It should be noted that, in this example, that the network element of the core network sends the downlink data to the macro base station, and the macro base station is in charge of macro-micro coordination decision-making and scheduling is used only as an example. In another possible implementation, the network element of the core network may send the downlink data to the small cell, and the small cell is in charge of macro-micro coordination decision-making and scheduling. When the small cell decides that macro-micro coordination is to be performed, the small cell sends, to the node, the data that is in the downlink data and that needs to be transmitted by the macro base station. Accordingly, the node receives, from the small cell, the data that is in the downlink data and that needs to be transmitted by the macro base station, and forwards, to the macro base station, the data that needs to be transmitted by the macro base station. Then, the macro base station sends, to the user equipment, the data that needs to be transmitted by the macro base station.

It should be further noted that, in this example, the downlink transmission process is used only as an example. An uplink transmission process may be as follows: The macro base station receives first uplink data sent by the user equipment, and the small cell receives second uplink data sent by the user equipment; the small cell sends the second uplink data to the node; the node forwards the second uplink data to the macro base station; when the first uplink data and the second uplink data are coordinated data that needs to be cooperatively transmitted by the macro base station and the small cell, the macro base station consolidates the first uplink data and the second uplink data to obtain third uplink data; and the macro base station sends the third uplink data to the network element of the core network. In the uplink transmission process, a function of the macro base station and that of the small cell may be interchanged. It may be learned that, in the uplink transmission process, when data interaction is performed between the macro base station and the small cell, the node in the access network also performs forwarding, without a requirement of forwarding by the core network, thereby fully shortening time required in the forwarding process.

It should be further noted that, in this example, that the node forwards user plane data transmitted between the macro base station and the small cell is used only as an example for description. In a macro-micro coordination process, control plane signaling transmitted between the macro base station and the small cell may also be forwarded by the node, without a requirement of forwarding by the core network. Therefore, in this embodiment, a transmission delay of the control plane signaling transmitted between the macro base station and the small cell may also be shortened.

In conclusion, in the data transmission method provided in this example, a node is additionally deployed in an access network, and the node schedules coordinated data in a macro-micro coordination process, so as to resolve a problem, in a related technology in a macro-micro coordination transmission mode, that a delay of transmission between a macro base station and a small cell is relatively long and macro-micro coordination performance is affected. Therefore, the delay of transmission between the macro base station and the small cell is shortened, and the macro-micro coordination performance is improved.

In addition, the node further forwards user plane data and/or control plane signaling transmitted between the macro base station and the small cell, without a requirement of forwarding by a core network, thereby fully shortening time required in a forwarding process and improving macro-micro coordination efficiency and the macro-micro coordination performance.

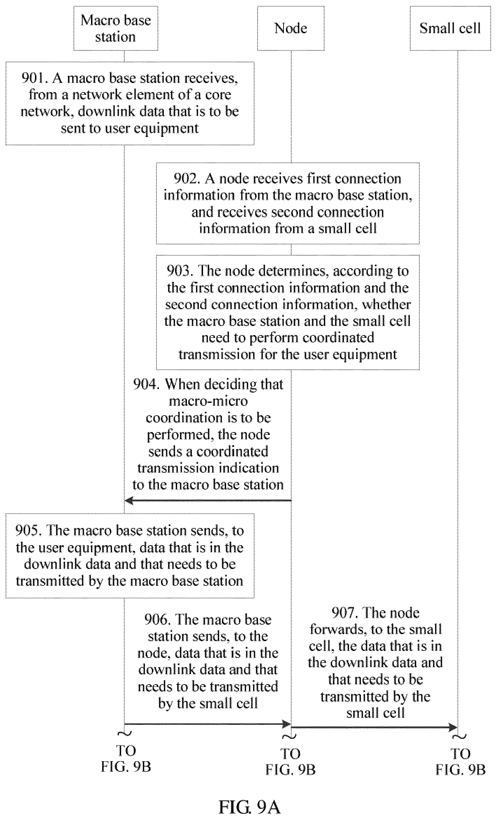

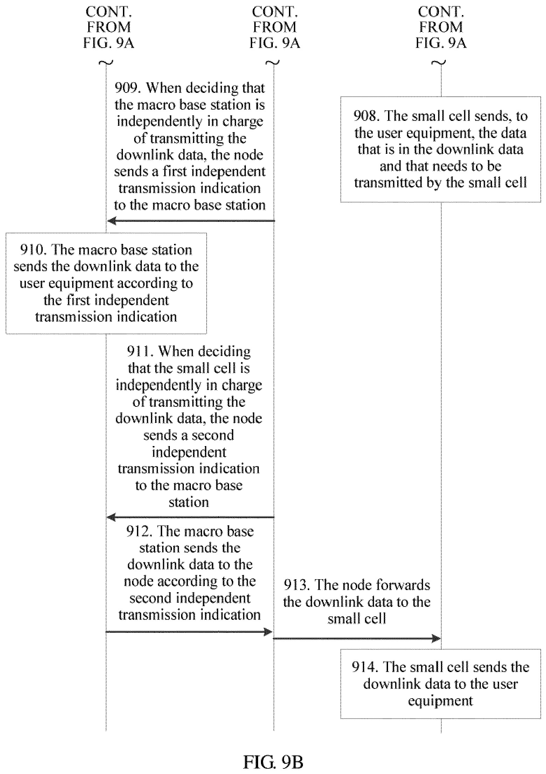

Referring to FIG. 9A and FIG. 9B, FIG. 9A and FIG. 9B show a flowchart of a data transmission method applicable to a network of macro-micro coordination among base stations according to another embodiment of the present invention. That the data transmission method is applied to the network architecture shown in FIG. 7 is used as an example for description in this embodiment. The data transmission method may include the following several steps.

Step 901: A macro base station receives, from a network element of a core network, downlink data that is to be sent to user equipment.

An S1 connection is established between the macro base station and the network element of the core network, and based on the S1 connection, the network element of the core network sends, to the macro base station, the downlink data that needs to be delivered to the user equipment. Accordingly, the macro base station receives, from the network element of the core network, the downlink data that is to be sent to the user equipment.

Step 902: A node receives first connection information from the macro base station, and receives second connection information from a small cell.

What is different from the embodiment shown in FIG. 8A and FIG. 8B is as follows: In this embodiment, the node decides whether macro-micro coordination is to be performed. The first connection information is used to indicate quality of a network connection between the macro base station and the user equipment, and the second connection information is used to indicate quality of a network connection between the small cell and the user equipment.

In addition, the macro base station and the small cell may actively report connection information to the node, for example, report the connection information to the node at a preset time interval; or after receiving a reporting indication sent by the node, the macro base station and the small cell may report connection information to the node according to the reporting indication.

Step 903: The node determines, according to the first connection information and the second connection information, whether the macro base station and the small cell need to perform coordinated transmission for the user equipment.

A process in which the node decides whether macro-micro coordination is to be performed is described in the foregoing several embodiments. For details, refer to the description of the decision-making process in the foregoing embodiment. The details are not described again in this embodiment.

When deciding that macro-micro coordination is to be performed, the node performs the following step 904.

When deciding that macro-micro coordination is not to be performed, the node further decides whether the macro base station or the small cell is independently in charge of transmitting the downlink data. When a decision result is that the macro base station is independently in charge of transmitting the downlink data, the node performs the following step 909; or when a decision result is that the small cell is independently in charge of transmitting the downlink data, the node performs the following step 911.

Step 904: When deciding that macro-micro coordination is to be performed, the node sends a coordinated transmission indication to the macro base station.

The coordinated transmission indication is used to instruct the macro base station and the small cell to cooperatively transmit the foregoing downlink data to the user equipment.

Optionally, the coordinated transmission indication may carry indication information about a type of macro-micro coordination, so that the macro base station determines the type of macro-micro coordination according to the indication information. Types of macro-micro coordination include, but are not limited to, joint transmission, coordinated scheduling, beamforming, dynamic cell selection, carrier aggregation, dual connectivity, and the like.

Optionally, the node also sends a coordinated transmission indication to the small cell.

Accordingly, after receiving the coordinated transmission indication sent by the node, the macro base station performs the following step 905 and step 906 according to the coordinated transmission indication.

Step 905: The macro base station sends, to the user equipment, data that is in the downlink data and that needs to be transmitted by the macro base station.

Step 906: The macro base station sends, to the node, data that is in the downlink data and that needs to be transmitted by the small cell.

When a decision is to perform macro-micro coordination, the foregoing downlink data is coordinated data that needs to be cooperatively transmitted by the macro base station and the small cell. In this case, the macro base station sends, to the user equipment, the data that is in the downlink data and that needs to be transmitted by the macro base station, and sends, to the node, the data that is in the downlink data and that needs to be transmitted by the small cell.

In a possible implementation, according to indication information carried in the coordinated transmission indication, the macro base station may determine the data that is in the downlink data and that needs to be transmitted by the macro base station, and determine the data that is in the downlink data and that needs to be transmitted by the small cell.

In this embodiment, the data that is in the downlink data and that needs to be transmitted by the small cell is forwarded from the macro base station to the small cell by using the node in an access network, without a requirement of forwarding by the core network, thereby fully shortening time required in the forwarding process.

Accordingly, the node receives, from the macro base station, the data that is in the downlink data and that needs to be transmitted by the small cell.

It should be noted that, the foregoing step 906 may be performed before step 905, or may be performed after step 905, or may be simultaneously performed with step 905. This is not limited in this embodiment.

Step 907: The node forwards, to the small cell, the data that is in the downlink data and that needs to be transmitted by the small cell.

Accordingly, the small cell receives, from the node, the data that is in the downlink data and that needs to be transmitted by the small cell.

Step 908: The small cell sends, to the user equipment, the data that is in the downlink data and that needs to be transmitted by the small cell.

Step 909: When deciding that the macro base station is independently in charge of transmitting the downlink data, the node sends a first independent transmission indication to the macro base station.

The first independent transmission indication is used to notify the macro base station that the foregoing downlink data needs to be independently transmitted by the macro base station to the user equipment.

Accordingly, the macro base station receives the first independent transmission indication from the node.

Step 910: The macro base station sends the downlink data to the user equipment according to the first independent transmission indication.

Step 911: When deciding that the small cell is independently in charge of transmitting the downlink data, the node sends a second independent transmission indication to the macro base station.

The second independent transmission indication is used to notify the macro base station that the foregoing downlink data needs to be independently transmitted by the small cell to the user equipment.

Step 912: The macro base station sends the downlink data to the node according to the second independent transmission indication.

Accordingly, the node receives the downlink data from the macro base station.

Step 913: The node forwards the downlink data to the small cell.

Accordingly, the small cell receives the downlink data from the node.

Step 914: The small cell sends the downlink data to the user equipment.

It should be noted that, in another possible implementation, a function of the macro base station and that of the small cell may be interchanged. In addition, in this embodiment, the downlink transmission process is used only as an example. Based on this embodiment, an uplink transmission process can be easily figured out by a person skilled in the art, and is not described in detail in this embodiment.

In conclusion, in the data transmission method provided in this embodiment, a node is additionally deployed in an access network, and the node schedules coordinated data in a macro-micro coordination process, so as to resolve a problem, in a related technology in a macro-micro coordination transmission mode, that a delay of transmission between a macro base station and a small cell is relatively long and macro-micro coordination performance is affected. Therefore, the delay of transmission between the macro base station and the small cell is shortened, and the macro-micro coordination performance is improved.

In addition, the node further decides whether macro-micro coordination is to be performed, and the node shares a macro-micro coordination decision-making function and a macro-micro coordination scheduling function of the base station, thereby reducing processing overheads of the base station.

It should be additionally noted that, in the foregoing embodiments, a macro base station and a small cell may also establish an X2 connection by using a node. That an initiator establishing the X2 connection is the macro base station is used as an example. The macro base station sends an X2 setup request message to the node, the X2 setup request message carries a device identifier of the small cell, and the node forwards the X2 setup request message to the small cell according to the device identifier of the small cell. Accordingly, the small cell receives the X2 setup request message sent by the node, and replies by using the node to forward an X2 setup response message to the macro base station. After the macro base station successfully receives the X2 setup response message, the macro base station successfully establishes the X2 connection to the small cell. Certainly, in another possible implementation, the initiator establishing the X2 connection may be the small cell. In addition, the macro base station and the small cell may further maintain the established X2 connection by using the node. In the maintenance process, all messages exchanged between the macro base station and the small cell may be forwarded by the node.

It may be learned that, a node is additionally deployed in an access network, and all interactive data of a macro base station and a small cell may be transparently forwarded by the node, so as to shorten a transmission delay and fully improve coordination performance of the macro base station and the small cell.

The following is an apparatus embodiment of the present invention, and an apparatus may be configured to execute the method embodiment of the present invention. For details not disclosed in the apparatus embodiment of the present invention, refer to the method embodiment of the present invention.

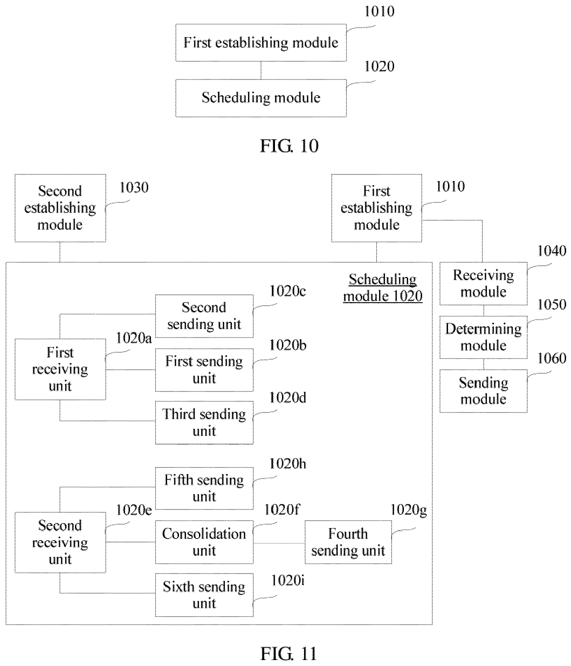

Referring to FIG. 10, FIG. 10 shows a structural block diagram of a data transmission apparatus applicable to a network of macro-micro coordination among base stations according to an embodiment of the present invention. The data transmission apparatus may be implemented as all or a part of the node 120 in the implementation environment shown in FIG. 1. The data transmission apparatus may include a first establishing module 1010 and a scheduling module 1020.

The first establishing module 1010 is configured to separately establish a connection to a macro base station and a small cell, where the node, the macro base station, and the small cell are located in a same access network, and the connection is an X2 connection or a user-defined logical connection.

The scheduling module 1020 is configured to schedule coordinated data, where the coordinated data is data cooperatively transmitted by the macro base station and the small cell for user equipment.

In conclusion, according to the data transmission apparatus provided in this embodiment, a node is additionally deployed in an access network, and the node schedules coordinated data in a macro-micro coordination process, so as to resolve a problem, in a related technology in a macro-micro coordination transmission mode, that a delay of transmission between a macro base station and a small cell is relatively long and macro-micro coordination performance is affected. Therefore, the delay of transmission between the macro base station and the small cell is shortened, and the macro-micro coordination performance is improved.

Referring to FIG. 11, FIG. 11 shows a structural block diagram of a data transmission apparatus applicable to a network of macro-micro coordination among base stations according to another embodiment of the present invention. The data transmission apparatus may be implemented as all or a part of the node 320 in the network architecture shown in FIG. 3. The data transmission apparatus may include a first establishing module 1010 and a scheduling module 1020.

The first establishing module 1010 is configured to separately establish a connection to a macro base station and a small cell, where the node, the macro base station, and the small cell are located in a same access network, and the connection is an X2 connection or a user-defined logical connection.

The scheduling module 1020 is configured to schedule coordinated data, where the coordinated data is data cooperatively transmitted by the macro base station and the small cell for user equipment.

Optionally, the scheduling module 1020 includes a first receiving unit 1020a and a first sending unit 1020b.

The first receiving unit 1020a is configured to receive, from a network element of a core network, downlink data that is to be sent to the user equipment.

The first sending unit 1020b is configured to: when the downlink data received by the first receiving unit 1020a is the coordinated data that needs to be cooperatively transmitted by the macro base station and the small cell, send, to the macro base station, data that is in the downlink data and that needs to be transmitted by the macro base station, and send, to the small cell, data that is in the downlink data and that needs to be transmitted by the small cell.

Optionally, the scheduling module 1020 further includes a second sending unit 1020c and a third sending unit 1020d.

The second sending unit 1020c is configured to: when the downlink data received by the first receiving unit 1020a is data that needs to be independently transmitted by the macro base station, send the downlink data to the macro base station.

The third sending unit 1020d is configured to: when the downlink data received by the first receiving unit 1020a is data that needs to be independently transmitted by the small cell, send the downlink data to the small cell.

Optionally, the scheduling module 1020 includes a second receiving unit 1020e, a consolidation unit 1020f, and a fourth sending unit 1020g.

The second receiving unit 1020e is configured to receive first uplink data from the macro base station, and receive second uplink data from the small cell.

The consolidation unit 1020f is configured to: when the first uplink data and the second uplink data that are received by the second receiving unit 1020e are the coordinated data that needs to be cooperatively transmitted by the macro base station and the small cell, consolidate the first uplink data and the second uplink data to obtain third uplink data.

The fourth sending unit 1020g is configured to send, to the network element of the core network, the third uplink data obtained by means of consolidation by the consolidation unit 1020f.

Optionally, the scheduling module 1020 further includes a fifth sending unit 1020h and a sixth sending unit 1020i.

The fifth sending unit 1020h is configured to: when the first uplink data received by the second receiving unit 1020e is data that needs to be independently transmitted by the macro base station, directly send the first uplink data to the network element of the core network.

The sixth sending unit 1020i is configured to: when the second uplink data received by the second receiving unit 1020e is data that needs to be independently transmitted by the small cell, directly send the second uplink data to the network element of the core network.

Optionally, the apparatus further includes a second establishing module 1030.

The second establishing module 1030 is configured to establish an S1 connection to the network element of the core network.

Optionally, the apparatus further includes a receiving module 1040, a determining module 1050, and a sending module 1060.

The receiving module 1040 is configured to receive first connection information from the macro base station, and receive second connection information from the small cell, where the first connection information is used to indicate quality of a network connection between the macro base station and the user equipment, and the second connection information is used to indicate quality of a network connection between the small cell and the user equipment.

The determining module 1050 is configured to determine, according to the first connection information and the second connection information that are received by the receiving module 1040, whether the macro base station and the small cell need to perform coordinated transmission for the user equipment.

The sending module 1060 is configured to: when the determining module 1050 determines that coordinated transmission is required, send a coordinated transmission indication to the macro base station and/or the small cell.

It should be noted that, the first receiving unit 1020a, the second receiving unit 1020e, and the receiving module 1040 may be implemented by different functional modules, or may be implemented by a same functional module, and this is not limited in this embodiment. Similarly, the first sending unit 1020b, the second sending unit 1020c, the third sending unit 1020d, the fourth sending unit 1020g, the fifth sending unit 1020h, the sixth sending unit 1020i, and the sending module 1060 may be implemented by different functional modules, or may be implemented by a same functional module, and this is also not limited in this embodiment.

In conclusion, according to the data transmission apparatus provided in this embodiment, a node is additionally deployed in an access network, and the node schedules coordinated data in a macro-micro coordination process, so as to resolve a problem, in a related technology in a macro-micro coordination transmission mode, that a delay of transmission between a macro base station and a small cell is relatively long and macro-micro coordination performance is affected. Therefore, the delay of transmission between the macro base station and the small cell is shortened, and the macro-micro coordination performance is improved.

In addition, the node further aggregates downlink data sent by a network element of a core network to user equipment. When the downlink data is the coordinated data that needs to be cooperatively transmitted by the macro base station and the small cell, the node directly delivers, to the macro base station and the small cell, data that needs to be respectively transmitted by the two base stations, so that the data does not need to be forwarded between the two base stations for transmission, so as to avoid time consumption caused by data forwarding and fully improve macro-micro coordination efficiency and the macro-micro coordination performance.

In addition, in an uplink transmission process, the node aggregates the coordinated data that is cooperatively transmitted by the macro base station and the small cell for the user equipment to the network element of the core network, so that the coordinated data does not need to be forwarded between the macro base station and the small cell for transmission, so as to avoid the time consumption caused by data forwarding and fully improve the macro-micro coordination efficiency and the macro-micro coordination performance.

In addition, the node further decides whether macro-micro coordination is to be performed, and the node shares a macro-micro coordination decision-making function and a macro-micro coordination scheduling function of the base station, thereby reducing processing overheads of the base station.

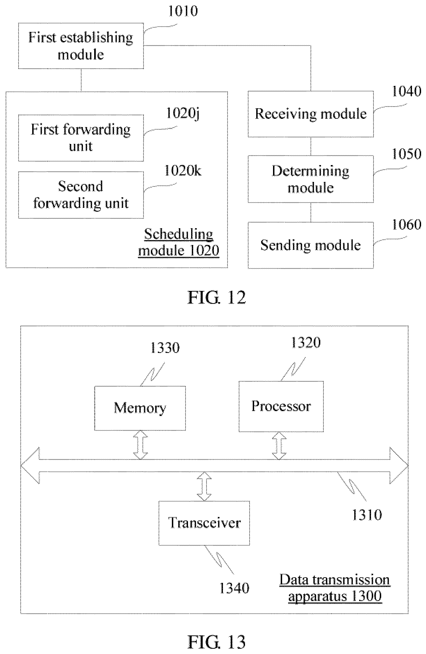

Referring to FIG. 12, FIG. 12 shows a structural block diagram of a data transmission apparatus applicable to a network of macro-micro coordination among base stations according to another embodiment of the present invention. The data transmission apparatus may be implemented as all or a part of the node 720 in the network architecture shown in FIG. 7. The data transmission apparatus may include a first establishing module 1010 and a scheduling module 1020.

The first establishing module 1010 is configured to separately establish a connection to a macro base station and a small cell, where the node, the macro base station, and the small cell are located in a same access network, and the connection is an X2 connection or a user-defined logical connection.

The scheduling module 1020 is configured to schedule coordinated data, where the coordinated data is data cooperatively transmitted by the macro base station and the small cell for user equipment.

Optionally, the scheduling module 1020 includes a first forwarding unit 1020j and/or a second forwarding unit 1020k.

The first forwarding unit 1020j is configured to: receive, from the macro base station, data that is in the coordinated data and that needs to be transmitted by the small cell, and forward, to the small cell, the data that needs to be transmitted by the small cell.

The second forwarding unit 1020k is configured to: receive, from the small cell, data that is in the coordinated data and that needs to be transmitted by the macro base station, and forward, to the macro base station, the data that needs to be transmitted by the macro base station.

Optionally, the apparatus further includes a receiving module 1040, a determining module 1050, and a sending module 1060.

The receiving module 1040 is configured to receive first connection information from the macro base station, and receive second connection information from the small cell, where the first connection information is used to indicate quality of a network connection between the macro base station and the user equipment, and the second connection information is used to indicate quality of a network connection between the small cell and the user equipment.

The determining module 1050 is configured to determine, according to the first connection information and the second connection information that are received by the receiving module 1040, whether the macro base station and the small cell need to perform coordinated transmission for the user equipment.

The sending module 1060 is configured to: when the determining module 1050 determines that coordinated transmission is required, send a coordinated transmission indication to the macro base station and/or the small cell.

In conclusion, according to the data transmission apparatus provided in this embodiment, a node is additionally deployed in an access network, and the node schedules coordinated data in a macro-micro coordination process, so as to resolve a problem, in a related technology in a macro-micro coordination transmission mode, that a delay of transmission between a macro base station and a small cell is relatively long and macro-micro coordination performance is affected. Therefore, the delay of transmission between the macro base station and the small cell is shortened, and the macro-micro coordination performance is improved.

In addition, the node further forwards data transmitted between the macro base station and the small cell, without a requirement of forwarding by a core network, thereby fully shortening time required in a forwarding process and improving macro-micro coordination efficiency and the macro-micro coordination performance.

In addition, the node further decides whether macro-micro coordination is to be performed, and the node shares a macro-micro coordination decision-making function and a macro-micro coordination scheduling function of the base station, thereby reducing processing overheads of the base station.

It should be noted that, for data transmission performed by the data transmission apparatus provided in the foregoing embodiment, division of the foregoing functional modules is used only as an example for description. In a practical application, the foregoing functions may be allocated to different functional modules for completion according to a need. That is, an internal structure of a device is divided into different functional modules to complete all or a part of the functions described above. In addition, the data transmission apparatus provided in the foregoing embodiment pertains to a same concept as the method embodiment of the data transmission method. For a specific implementation process of the data transmission apparatus, refer to the method embodiment. Details are not described herein again.

Referring to FIG. 13, FIG. 13 shows a schematic structural diagram of a data transmission apparatus applicable to a network of macro-micro coordination among base stations according to another embodiment of the present invention. The data transmission apparatus 1300 may be implemented as all or a part of a node. As shown in FIG. 13, the data transmission apparatus 1300 includes a bus 1310, and a processor 1320, a memory 1330, and a transceiver 1340 that communicate by using the bus 1310. The memory 1330 is configured to store one or more instructions, and the instruction is configured to be executed by the processor 1320. Details are as follows:

The processor 1320 is configured to separately establish a connection to a macro base station and a small cell, where the node, the macro base station, and the small cell are located in a same access network, and the connection is an X2 connection or a user-defined logical connection.

The processor 1320 is further configured to schedule coordinated data, where the coordinated data is data cooperatively transmitted by the macro base station and the small cell for user equipment.

In conclusion, according to the data transmission apparatus provided in this embodiment, a node is additionally deployed in an access network, and the node schedules coordinated data in a macro-micro coordination process, so as to resolve a problem, in a related technology in a macro-micro coordination transmission mode, that a delay of transmission between a macro base station and a small cell is relatively long and macro-micro coordination performance is affected. Therefore, the delay of transmission between the macro base station and the small cell is shortened, and the macro-micro coordination performance is improved.

Based on the embodiment shown in FIG. 13, the following provides an optional embodiment.

The transceiver 1340 is configured to receive, from a network element of a core network, downlink data that is to be sent to the user equipment.

The transceiver 1340 is further configured to: when the downlink data is the coordinated data that needs to be cooperatively transmitted by the macro base station and the small cell, send, to the macro base station, data that is in the downlink data and that needs to be transmitted by the macro base station, and send, to the small cell, data that is in the downlink data and that needs to be transmitted by the small cell.

Further, the transceiver 1340 is further configured to: when the downlink data is data that needs to be independently transmitted by the macro base station, send the downlink data to the macro base station.

The transceiver 1340 is further configured to: when the downlink data is data that needs to be independently transmitted by the small cell, send the downlink data to the small cell.

Based on the embodiment shown in FIG. 13, the following provides another optional embodiment.

The transceiver 1340 is configured to receive first uplink data from the macro base station, and receive second uplink data from the small cell.

The processor 1320 is further configured to: when the first uplink data and the second uplink data are the coordinated data that needs to be cooperatively transmitted by the macro base station and the small cell, consolidate the first uplink data and the second uplink data to obtain third uplink data.

The transceiver 1340 is further configured to send the third uplink data to the network element of the core network.

Further, the transceiver 1340 is further configured to: when the first uplink data is data that needs to be independently transmitted by the macro base station, directly send the first uplink data to the network element of the core network.

The transceiver 1340 is further configured to: when the second uplink data is data that needs to be independently transmitted by the small cell, directly send the second uplink data to the network element of the core network.

Based on the embodiment shown in FIG. 13, the following provides another optional embodiment.

The processor 1320 is further configured to establish an S1 connection to the network element of the core network.

Based on the embodiment shown in FIG. 13, the following provides another optional embodiment.

The transceiver 1340 is configured to: receive, from the macro base station, data that is in the coordinated data and that needs to be transmitted by the small cell, and forward, to the small cell, the data that needs to be transmitted by the small cell; and/or
the transceiver 1340 is configured to: receive, from the small cell, data that is in the coordinated data and that needs to be transmitted by the macro base station, and forward, to the macro base station, the data that needs to be transmitted by the macro base station.

Based on the embodiment shown in FIG. 13, the following provides another optional embodiment.

The transceiver 1340 is configured to receive first connection information from the macro base station, and receive second connection information from the small cell, where the first connection information is used to indicate quality of a network connection between the macro base station and the user equipment, and the second connection information is used to indicate quality of a network connection between the small cell and the user equipment.

The processor 1320 is further configured to determine, according to the first connection information and the second connection information, whether the macro base station and the small cell need to perform coordinated transmission for the user equipment.

The transceiver 1340 is further configured to: when it is determined that coordinated transmission is required, send a coordinated transmission indication to the macro base station and/or the small cell.

It should be understood that the singular form "one" ("a", "an", "the") used in the document is intended to further include a plural form unless the context clearly supports an otherwise case. It should be also understood that "and/or" used herein indicates that any or all possible combinations of one or more associated listed items are included.

The sequence numbers of the foregoing embodiments of the present invention are merely for illustrative purposes, and are not intended to indicate priorities of the embodiments.

A person of ordinary skill in the art may understand that all or some of the steps of the embodiments may be implemented by hardware or a program instructing related hardware. The program may be stored in a computer-readable storage medium. The storage medium may include a read-only memory, a magnetic disk, or an optical disc.

The foregoing descriptions are merely examples of embodiments of the present invention, but are not intended to limit the present invention. Any modification, and improvement made without departing from the scope of the present invention as defined by the claims shall fall within the protection scope of the present invention.

## Claims

1. A data transmission method, wherein the method comprises:
separately establishing (202; 401; 601), by a node, a connection to a macro base station and a small cell, wherein the node, the macro base station, and the small cell are located in a same access network, and the connection is an X2 connection or a user-defined logical connection; and
scheduling (204), by the node, coordinated data, wherein the coordinated data is data cooperatively transmitted by the macro base station and the small cell for user equipment **characterized in, that** the method further comprises:
receiving (51), by the node, first connection information from the macro base station, and receiving (51) second connection information from the small cell, wherein the first connection information is used to indicate quality of a network connection between the macro base station and the user equipment, and the second connection information is used to indicate quality of a network connection between the small cell and the user equipment;
determining (52), by the node according to the first connection information and the second connection information, whether the macro base station and the small cell need to perform coordinated transmission for the user equipment; and
if coordinated transmission is required, sending (53), by the node, a coordinated transmission indication to the macro base station and/or the small cell..

2. The method according to claim 1, wherein the scheduling, by the node, coordinated data comprises:
receiving (403), by the node from a network element of a core network, downlink data that is to be sent to the user equipment; and
when the downlink data is the coordinated data that needs to be cooperatively transmitted by the macro base station and the small cell, sending (404), by the node to the macro base station, data that is in the downlink data and that needs to be transmitted by the macro base station, and sending (404), to the small cell, data that is in the downlink data and that needs to be transmitted by the small cell.

3. The method according to claim 2, wherein after the receiving, by the node from a network element of a core network, downlink data that is to be sent to the user equipment, the method further comprises:
when the downlink data is data that needs to be independently transmitted by the macro base station, sending (405), by the node, the downlink data to the macro base station; or when the downlink data is data that needs to be independently transmitted by the small cell, sending (406), by the node, the downlink data to the small cell.

4. The method according to claim 1, wherein the scheduling, by the node, coordinated data comprises:
receiving (603), by the node, first uplink data from the macro base station, and receiving (603) second uplink data from the small cell;
when the first uplink data and the second uplink data are the coordinated data that needs to be cooperatively transmitted by the macro base station and the small cell, consolidating (604), by the node, the first uplink data and the second uplink data to obtain third uplink data; and
sending (605), by the node, the third uplink data to a network element of a core network.

5. The method according to claim 4, wherein after the receiving, by the node, first uplink data from the macro base station, and receiving second uplink data from the small cell, the method further comprises:
when the first uplink data is data that needs to be independently transmitted by the macro base station, directly sending (606), by the node, the first uplink data to the network element of the core network; and/or
when the second uplink data is data that needs to be independently transmitted by the small cell, directly sending (607), by the node, the second uplink data to the network element of the core network.

6. The method according to any one of claims 2 to 5, wherein the method further comprises:
establishing (402; 602), by the node, an S1 connection to the network element of the core network.

7. The method according to claim 1, wherein the scheduling, by the node, coordinated data comprises:
receiving (805), by the node from the macro base station, data that is in the coordinated data and that needs to be transmitted by the small cell, and forwarding (806), to the small cell, the data that needs to be transmitted by the small cell; or
receiving, by the node from the small cell, data that is in the coordinated data and that needs to be transmitted by the macro base station, and forwarding, to the macro base station, the data that needs to be transmitted by the macro base station.

8. A data transmission apparatus, applied to a node, wherein the apparatus comprises:
a first establishing module (1010), configured to separately establish a connection to a macro base station and a small cell, wherein the node, the macro base station, and the small cell are located in a same access network, and the connection is an X2 connection or a user-defined logical connection; and
a scheduling module (1020), configured to schedule coordinated data, wherein the coordinated data is data cooperatively transmitted by the macro base station and the small cell for user equipment **characterized in, that** the apparatus further comprises:
a receiving module (1040), configured to receive first connection information from the macro base station, and receive second connection information from the small cell, wherein the first connection information is used to indicate quality of a network connection between the macro base station and the user equipment, and the second connection information is used to indicate quality of a network connection between the small cell and the user equipment;
a determining module (1050), configured to determine, according to the first connection information and the second connection information, whether the macro base station and the small cell need to perform coordinated transmission for the user equipment; and
a sending module (1060), configured to: when it is determined that coordinated transmission is required, send a coordinated transmission indication to the macro base station and/or the small cell..

9. The apparatus according to claim 8, wherein the scheduling module comprises: a first receiving unit (1020a) and a first sending unit (1020b);
the first receiving unit is configured to receive, from a network element of a core network, downlink data that is to be sent to the user equipment; and
the first sending unit is configured to: when the downlink data is the coordinated data that needs to be cooperatively transmitted by the macro base station and the small cell, send, to the macro base station, data that is in the downlink data and that needs to be transmitted by the macro base station, and send, to the small cell, data that is in the downlink data and that needs to be transmitted by the small cell.

10. The apparatus according to claim 9, wherein the scheduling module further comprises: a second sending unit (1020c) and a third sending unit (1020d);
the second sending unit is configured to: when the downlink data is data that needs to be independently transmitted by the macro base station, send the downlink data to the macro base station; and
the third sending unit is configured to: when the downlink data is data that needs to be independently transmitted by the small cell, send the downlink data to the small cell.

11. The apparatus according to claim 8, wherein the scheduling module comprises: a second receiving unit (1020e), a consolidation unit (1020f), and a fourth sending unit (1020g);
the second receiving unit is configured to receive first uplink data from the macro base station, and receive second uplink data from the small cell;
the consolidation unit is configured to: when the first uplink data and the second uplink data are the coordinated data that needs to be cooperatively transmitted by the macro base station and the small cell, consolidate the first uplink data and the second uplink data to obtain third uplink data; and
the fourth sending unit is configured to send the third uplink data to a network element of a core network.

12. The apparatus according to claim 11, wherein the scheduling module further comprises: a fifth sending unit (1020h) and a sixth sending unit (1020i);
the fifth sending unit is configured to: when the first uplink data is data that needs to be independently transmitted by the macro base station, directly send the first uplink data to the network element of the core network; and
the sixth sending unit is configured to: when the second uplink data is data that needs to be independently transmitted by the small cell, directly send the second uplink data to the network element of the core network.

13. The apparatus according to any one of claims 9 to 12, wherein the apparatus further comprises:
a second establishing module (1030), configured to establish an S1 connection to the network element of the core network.

14. The apparatus according to claim 8, wherein the scheduling module comprises: a first forwarding unit (1020j) and/or a second forwarding unit (1020k);
the first forwarding unit is configured to: receive, from the macro base station, data that is in the coordinated data and that needs to be transmitted by the small cell, and forward, to the small cell, the data that needs to be transmitted by the small cell; and
the second forwarding unit is configured to: receive, from the small cell, data that is in the coordinated data and that needs to be transmitted by the macro base station, and forward, to the macro base station, the data that needs to be transmitted by the macro base station.

## Patentansprüche

1. Datenübertragungsverfahren, wobei das Verfahren umfasst:
getrenntes Herstellen (202; 401; 601) einer Verbindung zu einer Makro-Basisstation und einer kleinen Zelle durch einen Knoten, wobei sich der Knoten, die Makro-Basisstation und die kleine Zelle in einem gleichen Zugangsnetz befinden und die Verbindung eine X2-Verbindung oder eine benutzerdefinierte logische Verbindung ist; und
Planen (204) koordinierter Daten durch den Knoten, wobei die koordinierten Daten Daten sind, die von der Makro-Basisstation und der kleinen Zelle für Benutzergeräte kooperativ übertragen werden, **dadurch gekennzeichnet, dass** das Verfahren ferner umfasst:
Empfangen (51) von ersten Verbindungsinformationen von der Makro-Basisstation durch den Knoten und Empfangen (51) von zweiten Verbindungsinformationen von der kleinen Zelle, wobei die ersten Verbindungsinformationen verwendet werden, um die Qualität einer Netzwerkverbindung zwischen der Makro-Basisstation und dem Benutzergerät anzuzeigen, und die zweiten Verbindungsinformationen verwendet werden, um die Qualität einer Netzwerkverbindung zwischen der kleinen Zelle und dem Benutzergerät anzuzeigen;
Bestimmen (52) durch den Knoten gemäß der ersten Verbindungsinformation und der zweiten Verbindungsinformation, ob die Makro-Basisstation und die kleine Zelle eine koordinierte Übertragung für das Benutzergerät durchführen müssen; und
wenn eine koordinierte Übertragung erforderlich ist, Senden (53) einer koordinierten Übertragungsanzeige an die Makro-Basisstation und/oder die kleine Zelle durch den Knoten.

2. Verfahren nach Anspruch 1, wobei die Planung der koordinierten Daten durch den Knoten umfasst:
Empfangen (403) von Downlink-Daten, die an das Benutzergerät zu senden sind, durch den Knoten von einem Netzelement eines Kernnetzes; und
wenn die Downlink-Daten die koordinierten Daten sind, die von der Makro-Basisstation und der kleinen Zelle kooperativ übertragen werden müssen, Senden (404) von dem Knoten zur Makro-Basisstation, Daten, die sich in den Downlink-Daten befinden und von der Makro-Basisstation übertragen werden müssen, und Senden (404) von Daten, die sich in den Downlink-Daten befinden und von der kleinen Zelle übertragen werden müssen, an die kleine Zelle.

3. Verfahren nach Anspruch 2, wobei nach dem Empfangen von Downlink-Daten, die an das Benutzergerät zu senden sind, durch den Knoten von einem Netzelement eines Kernnetzes, das Verfahren ferner umfasst:
wenn die Downlink-Daten Daten sind, die unabhängig von der Makro-Basisstation übertragen werden müssen, Senden (405) der Downlink-Daten an die Makro-Basisstation durch den Knoten; oder wenn die Downlink-Daten Daten sind, die unabhängig von der kleinen Zelle übertragen werden müssen, Senden (406) durch den Knoten, der Downlink-Daten an die kleine Zelle.

4. Verfahren nach Anspruch 1, wobei die Planung der koordinierten Daten durch den Knoten umfasst:
Empfangen (603) von ersten Uplink-Daten von der Makro-Basisstation durch den Knoten und Empfangen (603) von zweiten Uplink-Daten von der kleinen Zelle;
wenn die ersten Uplink-Daten und die zweiten Uplink-Daten die koordinierten Daten sind, die von der Makro-Basisstation und der kleinen Zelle kooperativ übertragen werden müssen, Konsolidieren (604) der ersten Uplink-Daten und der zweiten Uplink-Daten durch den Knoten, um dritte Uplink-Daten zu erhalten; und
Senden (605) der dritten Uplink-Daten durch den Knoten an ein Netzelement eines Kernnetzes.

5. Verfahren nach Anspruch 4, wobei nach dem Empfangen erster Uplink-Daten von der Makro-Basisstation durch den Knoten und dem Empfangen zweiter Uplink-Daten von der kleinen Zelle das Verfahren ferner umfasst:
wenn die ersten Uplink-Daten Daten sind, die unabhängig von der Makro-Basisstation übertragen werden müssen, direktes Senden (606) der ersten Uplink-Daten an das Netzelement des Kernnetzes durch den Knoten; und/oder
wenn die zweiten Uplink-Daten Daten sind, die unabhängig von der kleinen Zelle übertragen werden müssen, direktes Senden (607) der zweiten Uplink-Daten an das Netzelement des Kernnetzes durch den Knoten.

6. Verfahren nach einem der Ansprüche 2 bis 5, wobei das Verfahren ferner umfasst:
herstellen (402; 602) einer S1-Verbindung zum Netzelement des Kernnetzes durch den Knoten.

7. Verfahren nach Anspruch 1, wobei die Planung der koordinierten Daten durch den Knoten umfasst:
Empfangen (805) von Daten, die sich in den koordinierten Daten befinden und von der kleinen Zelle übertragen werden müssen, durch den Knoten von der Makro-Basisstation und Weiterleiten (806) der Daten, die von der kleinen Zelle übertragen werden müssen, an die kleine Zelle; oder
Empfangen von Daten, die sich in den koordinierten Daten befinden und von der Makro-Basisstation übertragen werden müssen, durch den Knoten von der kleinen Zelle, und Weiterleiten der Daten, die von der Makro-Basisstation übertragen werden müssen, an die Makro-Basisstation.

8. Datenübertragungsvorrichtung, die auf einen Knoten angewendet wird, wobei die Vorrichtung umfasst:
ein erstes Herstellungsmodul (1010), das dazu konfiguriert ist, getrennt eine Verbindung zu einer Makro-Basisstation und einer kleinen Zelle herzustellen, wobei sich der Knoten, die Makro-Basisstation und die kleine Zelle in einem gleichen Zugangsnetz befinden und die Verbindung eine X2-Verbindung oder eine benutzerdefinierte logische Verbindung ist; und
ein Planungsmodul (1020), das dazu konfiguriert ist, koordinierte Daten zu planen, wobei die koordinierten Daten Daten sind, die von der Makro-Basisstation und der kleinen Zelle für Benutzergeräte kooperativ übertragen werden, **dadurch gekennzeichnet, dass** die Vorrichtung ferner umfasst:
ein Empfangsmodul (1040), das dazu konfiguriert ist, erste Verbindungsinformationen von der Makro-Basisstation zu empfangen und zweite Verbindungsinformationen von der kleinen Zelle zu empfangen, wobei die ersten Verbindungsinformationen verwendet werden, um die Qualität einer Netzwerkverbindung zwischen der Makro-Basisstation und dem Benutzergerät anzuzeigen, und die zweiten Verbindungsinformationen verwendet werden, um die Qualität einer Netzwerkverbindung zwischen der kleinen Zelle und dem Benutzergerät anzuzeigen;
ein Bestimmungsmodul (1050), das dazu konfiguriert ist, gemäß den ersten Verbindungsinformationen und den zweiten Verbindungsinformationen zu bestimmen, ob die Makro-Basisstation und die kleine Zelle eine koordinierte Übertragung für die Benutzereinrichtung durchführen müssen; und
ein Sendemodul (1060), das konfiguriert ist zum: wenn bestimmt wird, dass eine koordinierte Übertragung erforderlich ist, Senden einer koordinierten Übertragungsanzeige an die Makro-Basisstation und/oder die kleine Zelle.

9. Vorrichtung nach Anspruch 8, wobei das Planungsmodul umfasst: eine erste Empfangseinheit (1020a) und eine erste Sendeeinheit (1020b);
die erste Empfangseinheit dazu konfiguriert ist, von einem Netzelement eines Kernnetzes Downlink-Daten zu empfangen, die an das Benutzergerät zu senden sind; und
die erste Sendeeinheit konfiguriert ist zum: wenn die Downlink-Daten die koordinierten Daten sind, die von der Makro-Basisstation und der kleinen Zelle kooperativ übertragen werden müssen, Senden von Daten, die sich in den Downlink-Daten befinden und von der Makro-Basisstation übertragen werden müssen, an die Makro-Basisstation und Senden von Daten, die sich in den Downlink-Daten befinden und die von der kleinen Zelle übertragen werden müssen, an die kleine Zelle.

10. Vorrichtung nach Anspruch 9, wobei das Planungsmodul ferner umfasst: eine zweite Sendeeinheit (1020c) und eine dritte Sendeeinheit (1020d);
die zweite Sendeeinheit konfiguriert ist zum: wenn die Downlink-Daten Daten sind, die unabhängig von der Makro-Basisstation übertragen werden müssen, Senden der Downlink-Daten an die Makro-Basisstation; und
die dritte Sendeeinheit konfiguriert ist zum: wenn die Downlink-Daten Daten sind, die unabhängig von der kleinen Zelle übertragen werden müssen, Senden der Downlink-Daten an die kleine Zelle.

11. Vorrichtung nach Anspruch 8, wobei das Planungsmodul umfasst: eine zweite Empfangseinheit (1020e), eine Konsolidierungseinheit (1020f) und eine vierte Sendeeinheit (1020g);
die zweite Empfangseinheit dazu konfiguriert ist, erste Uplink-Daten von der Makro-Basisstation zu empfangen und zweite Uplink-Daten von der kleinen Zelle zu empfangen;
die Konsolidierungseinheit konfiguriert ist zum: wenn die ersten Uplink-Daten und die zweiten Uplink-Daten die koordinierten Daten sind, die von der Makro-Basisstation und der kleinen Zelle kooperativ übertragen werden müssen, Konsolidieren der ersten Uplink-Daten und der zweiten Uplink-Daten, um dritte Uplink-Daten zu erhalten; und
die vierte Sendeeinheit dazu konfiguriert ist, die dritten Uplink-Daten an ein Netzwerkelement eines Kernnetzes zu senden.

12. Vorrichtung nach Anspruch 11, wobei das Planungsmodul ferner umfasst: eine fünfte Sendeeinheit (1020h) und eine sechste Sendeeinheit (1020i);
die fünfte Sendeeinheit konfiguriert ist zum: wenn die ersten Uplink-Daten Daten sind, die unabhängig von der Makro-Basisstation übertragen werden müssen, Senden der ersten Uplink-Daten direkt an das Netzelement des Kernnetzes; und
die sechste Sendeeinheit konfiguriert ist zum: wenn die zweiten Uplink-Daten Daten sind, die unabhängig von der kleinen Zelle übertragen werden müssen, Senden der zweiten Uplink-Daten direkt an das Netzelement des Kernnetzes.

13. Vorrichtung nach einem der Ansprüche 9 bis 12, wobei die Vorrichtung ferner umfasst:
ein zweites Herstellungsmodul (1030), das dazu konfiguriert ist, eine S1-Verbindung zu dem Netzelement des Kernnetzes herzustellen.

14. Vorrichtung nach Anspruch 8, wobei das Planungsmodul umfasst: eine erste Weiterleitungseinheit (1020j) und/oder eine zweite Weiterleitungseinheit (1020k);
die erste Weiterleitungseinheit konfiguriert ist zum: Empfangen von Daten, die sich in den koordinierten Daten befinden und von der kleinen Zelle übertragen werden müssen, von der Makro-Basisstation, und Weiterleiten der Daten, die von der kleinen Zelle übertragen werden müssen, an die kleine Zelle; und
die zweite Weiterleitungseinheit konfiguriert ist zum: Empfangen von Daten, die sich in den koordinierten Daten befinden und von der Makro-Basisstation übertragen werden müssen, von der kleinen Zelle, und Weiterleiten der Daten, die von der Makro-Basisstation übertragen werden müssen, an die Makro-Basisstation.

## Revendications

1. Procédé de transmission de données, dans lequel le procédé consiste :
à établir séparément (202 ; 401 ; 601), au moyen d'un nœud, une connexion avec une station de base macro et une petite cellule, dans lequel le nœud, la station de base macro et la petite cellule sont situés dans un même réseau d'accès, et la connexion est une connexion X2 ou une connexion logique définie par l'utilisateur ; et
à planifier (204), au moyen du nœud, des données coordonnées, dans lequel les données coordonnées sont des données transmises de manière coopérative par la station de base macro et la petite cellule pour un équipement utilisateur, **caractérisé en ce que** le procédé consiste en outre :
à recevoir (51), au moyen du nœud, des premières informations de connexion en provenance de la station de base macro et à recevoir (51) des secondes informations de connexion en provenance de la petite cellule, dans lequel les premières informations de connexion sont utilisées pour indiquer la qualité d'une connexion réseau entre la station de base macro et l'équipement utilisateur et les secondes informations de connexion sont utilisées pour indiquer la qualité d'une connexion réseau entre la petite cellule et l'équipement utilisateur ;
à déterminer (52), au moyen du nœud, en fonction des premières informations de connexion et des secondes informations de connexion, si la station de base macro et la petite cellule doivent effectuer une transmission coordonnée pour l'équipement utilisateur ; et
si une transmission coordonnée est requise, à envoyer (53), au moyen du nœud, une indication de transmission coordonnée à la station de base macro et/ou à la petite cellule.

2. Procédé selon la revendication 1, dans lequel la planification, par le nœud, de données coordonnées consiste :
à recevoir (403), au moyen du nœud, en provenance d'un élément de réseau d'un réseau central, des données de liaison descendante qui doivent être envoyées à l'équipement utilisateur ; et
lorsque les données de liaison descendante sont les données coordonnées qui doivent être transmises de manière coopérative par la station de base macro et la petite cellule, à envoyer (404), au moyen du nœud, à la station de base macro, des données qui se trouvent dans les données de liaison descendante et qui doivent être transmises par la station de base macro, et à envoyer (404), à la petite cellule, des données qui se trouvent dans les données de liaison descendante et qui doivent être transmises par la petite cellule.

3. Procédé selon la revendication 2, dans lequel, après la réception, par le nœud, en provenance d'un élément de réseau d'un réseau central, de données de liaison descendante qui doivent être envoyées à l'équipement utilisateur, le procédé consiste en outre :
lorsque les données de liaison descendante sont des données qui doivent être transmises de manière indépendante par la station de base macro, à envoyer (405), au moyen du nœud, les données de liaison descendante à la station de base macro ; ou lorsque les données de liaison descendante sont des données qui doivent être transmises de manière indépendante par la petite cellule, à envoyer (406), au moyen du nœud, les données de liaison descendante à la petite cellule.

4. Procédé selon la revendication 1, dans lequel la planification, par le nœud, de données coordonnées consiste :
à recevoir (603), au moyen du nœud, des premières données de liaison montante en provenance de la station de base macro et à recevoir (603) des deuxièmes données de liaison montante en provenance de la petite cellule ;
lorsque les premières données de liaison montante et les deuxièmes données de liaison montante sont les données coordonnées qui doivent être transmises de manière coopérative par la station de base macro et la petite cellule, à consolider (604), au moyen du nœud, les premières données de liaison montante et les deuxièmes données de liaison montante pour obtenir des troisièmes données de liaison montante ; et
à envoyer (605), au moyen du nœud, les troisièmes données de liaison montante à un élément de réseau d'un réseau central.

5. Procédé selon la revendication 4, dans lequel, après la réception, par le nœud, des premières données de liaison montante en provenance de la station de base macro et la réception des deuxièmes données de liaison montante en provenance de la petite cellule, le procédé consiste en outre :
lorsque les premières données de liaison montante sont des données qui doivent être transmises de manière indépendante par la station de base macro, à envoyer directement (606), au moyen du nœud, les premières données de liaison montante à l'élément de réseau du réseau central ; et/ou
lorsque les deuxièmes données de liaison montante sont des données qui doivent être transmises de manière indépendante par la petite cellule, à envoyer directement (607), au moyen du nœud, les deuxièmes données de liaison montante à l'élément de réseau du réseau central.

6. Procédé selon l'une quelconque des revendications 2 à 5, dans lequel le procédé consiste en outre :
à établir (402 ; 602), au moyen du nœud, une connexion SI avec l'élément de réseau du réseau central.

7. Procédé selon la revendication 1, dans lequel la planification, par le nœud, de données coordonnées consiste :
à recevoir (805), au moyen du nœud, en provenance de la station de base macro, des données qui se trouvent dans les données coordonnées et qui doivent être transmises par la petite cellule et à transférer (806), à la petite cellule, les données qui doivent être transmises par la petite cellule ; ou
à recevoir, au moyen du nœud, en provenance de la petite cellule, des données qui se trouvent dans les données coordonnées et qui doivent être transmises par la station de base macro et à transférer, à la station de base macro, les données qui doivent être transmises par la station de base macro.

8. Appareil de transmission de données, appliqué à un nœud, dans lequel l'appareil comprend :
un premier module d'établissement (1010), configuré pour établir séparément une connexion avec une station de base macro et une petite cellule, dans lequel le nœud, la station de base macro et la petite cellule sont situés dans un même réseau d'accès, et la connexion est une connexion X2 ou une connexion logique définie par l'utilisateur ; et
un module de planification (1020), configuré pour planifier des données coordonnées, dans lequel les données coordonnées sont des données transmises de manière coopérative par la station de base macro et la petite cellule pour un équipement utilisateur, **caractérisé en ce que** l'appareil comprend en outre :
un module de réception (1040), configuré pour recevoir des premières informations de connexion en provenance de la station de base macro et pour recevoir des secondes informations de connexion en provenance de la petite cellule, dans lequel les premières informations de connexion sont utilisées pour indiquer la qualité d'une connexion réseau entre la station de base macro et l'équipement utilisateur et les secondes informations de connexion sont utilisées pour indiquer la qualité d'une connexion réseau entre la petite cellule et l'équipement utilisateur ;
un module de détermination (1050), configuré pour déterminer, en fonction des premières informations de connexion et des secondes informations de connexion, si la station de base macro et la petite cellule doivent effectuer une transmission coordonnée pour l'équipement utilisateur ; et
un module d'envoi (1060), configuré : lorsqu'il est déterminé qu'une transmission coordonnée est requise, pour envoyer une indication de transmission coordonnée à la station de base macro et/ou à la petite cellule.

9. Appareil selon la revendication 8, dans lequel le module de planification comprend :
une première unité de réception (1020a) et une première unité d'envoi (1020b) ;
la première unité de réception est configurée pour recevoir, en provenance d'un élément de réseau d'un réseau central, des données de liaison descendante qui doivent être envoyées à l'équipement utilisateur ; et
la première unité d'envoi est configurée : lorsque les données de liaison descendante sont les données coordonnées qui doivent être transmises de manière coopérative par la station de base macro et la petite cellule, pour envoyer, à la station de base macro, des données qui se trouvent dans les données de liaison descendante et qui doivent être transmises par la station de base macro, et pour envoyer, à la petite cellule, des données qui se trouvent dans les données de liaison descendante et qui doivent être transmises par la petite cellule.

10. Appareil selon la revendication 9, dans lequel le module de planification comprend en outre : une deuxième unité d'envoi (1020c) et une troisième unité d'envoi (1020d) ;
la deuxième unité d'envoi est configurée : lorsque les données de liaison descendante sont des données qui doivent être transmises de manière indépendante par la station de base macro, pour envoyer les données de liaison descendante à la station de base macro ; et
la troisième unité d'envoi est configurée : lorsque les données de liaison descendante sont des données qui doivent être transmises de manière indépendante par la petite cellule, pour envoyer les données de liaison descendante à la petite cellule.

11. Appareil selon la revendication 8, dans lequel le module de planification comprend :
une seconde unité de réception (1020e), une unité de consolidation (1020f) et une quatrième unité d'envoi (1020g) ;
la seconde unité de réception est configurée pour recevoir des premières données de liaison montante en provenance de la station de base macro et pour recevoir des deuxièmes données de liaison montante en provenance de la petite cellule ;
l'unité de consolidation est configurée : lorsque les premières données de liaison montante et les deuxièmes données de liaison montante sont les données coordonnées qui doivent être transmises de manière coopérative par la station de base macro et la petite cellule, pour consolider les premières données de liaison montante et les deuxièmes données de liaison montante pour obtenir des troisièmes données de liaison montante ; et
la quatrième unité d'envoi est configurée pour envoyer les troisièmes données de liaison montante à un élément de réseau d'un réseau central.

12. Appareil selon la revendication 11, dans lequel le module de planification comprend en outre : une cinquième unité d'envoi (1020h) et une sixième unité d'envoi (1020i) ;
la cinquième unité d'envoi est configurée : lorsque les premières données de liaison montante sont des données qui doivent être transmises de manière indépendante par la station de base macro, pour envoyer directement les premières données de liaison montante à l'élément de réseau du réseau central ; et
la sixième unité d'envoi est configurée : lorsque les deuxièmes données de liaison montante sont des données qui doivent être transmises de manière indépendante par la petite cellule, pour envoyer directement les deuxièmes données de liaison montante à l'élément de réseau du réseau central.

13. Appareil selon l'une quelconque des revendications 9 à 12, dans lequel l'appareil comprend en outre :
un second module d'établissement (1030), configuré pour établir une connexion S1 avec l'élément de réseau du réseau central.

14. Appareil selon la revendication 8, dans lequel le module de planification comprend :
une première unité de transfert (1020j) et/ou une seconde unité de transfert (1020k) ;
la première unité de transfert est configurée : pour recevoir, en provenance de la station de base macro, des données qui se trouvent dans les données coordonnées et qui doivent être transmises par la petite cellule et pour transférer, à la petite cellule, les données qui doivent être transmises par la petite cellule ; et
la seconde unité de transfert est configurée : pour recevoir, en provenance de la petite cellule, des données qui se trouvent dans les données coordonnées et qui doivent être transmises par la station de base macro et pour transférer, à la station de base macro, les données qui doivent être transmises par la station de base macro.
